Europäisches Patentamt

European Patent Office

Office européen des brevets

(19)

(11) **EP 0 218 660 B2**

(12) **NOUVEAU FASCICULE DE BREVET EUROPEEN**

(45) Date de publication et mention de la décision concernant l'opposition:
**07.08.1996 Bulletin 1996/32**

(45) Mention de la délivrance du brevet:
**07.06.1989 Bulletin 1989/23**

(21) Numéro de dépôt: **86902421.6**

(22) Date de dépôt: **15.04.1986**

(51) Int Cl.6: **C01B 13/10**, B01D 53/04

(86) Numéro de dépôt international:
**PCT/FR86/00126**

(87) Numéro de publication internationale:
**WO 86/06056 (23.10.1986 Gazette 1986/23)**

(54) **PROCEDE ET APPAREIL DE PRODUCTION D'OZONE**

VERFAHREN UND VORRICHTUNG ZUR ERZEUGUNG VON OZON

METHOD AND APPARATUS FOR THE PRODUCTION OF OZONE

(84) Etats contractants désignés:
**AT BE CH DE FR GB IT LI LU NL SE**

(30) Priorité: **16.04.1985 FR 8505699**

(43) Date de publication de la demande:
**22.04.1987 Bulletin 1987/17**

(73) Titulaire: **L'AIR LIQUIDE, SOCIETE ANONYME POUR
L'ETUDE ET L'EXPLOITATION DES PROCEDES
GEORGES CLAUDE
F-75321 Paris Cédex 07 (FR)**

(72) Inventeurs:
• **GRENIER, Maurice**
  **F-75018 Paris (FR)**
• **PETIT, Pierre Résidence Voltaire**
  **F-92290 Chatenay-Malabry (FR)**

(74) Mandataire: **Armengaud Ainé, Alain
Cabinet ARMENGAUD AINE
3 Avenue Bugeaud
75116 Paris (FR)**

(56) Documents cités:
**EP-A- 0 103 144       DE-A- 2 610 227
GB-A- 1 451 645       US-A- 2 872 397
US-A- 3 504 483       US-A- 4 324 564**

• **Chemical Abstracts, vol. 89, no. 18, October 30, 1978 (Columbus, Ohio, US), p. 111, abstract no. 148794v**
• **Chemical Abstracts, vol. 101, no. 18, October 29, 1984 (Columbus, Ohio, US), p. 127, abstract no. 154224s**

## Description

PROCEDE ET APPAREIL DE PRODUCTION D'OZONE

La présente invention est relative à un procédé de production d'ozone, du type dans lequel de l'oxygène en circulation dans une boucle d'ozonisation est partiellement ozonisé dans un ozoneur, puis l'ozone est piégé par adsorption et désorbé par un gaz de substitution.

L'invention a pour but de fournir des perfectionnements aux procédés connus de ce type permettant de réduire l'investissement, notamment pour la production de quantités importantes d'ozone, par exemple de l'ordre de 1800 kg/h d'ozone.

A cet effet l'invention a pour objet un procédé du type précité caractérisé en ce que on envoie le mélange oxygène-ozone dans une première masse d'adsorbant, dans un sens dit co-courant, où l'ozone est adsorbé ; on envoie simultanément dans une seconde masse d'adsorbant à contre courant, un flux de gaz de substitution servant à la désorption de cette seconde masse ; on effectue simultanément un balayage d'une troisième masse d'adsorbant en faisant traverser cette troisième masse d'adsorbant par un flux de gaz de balayage constitué d'une partie du mélange oxygène-ozone prélevé dans la boucle, ce gaz de balayage circulant à co-courant dans ladite troisième masse d'adsorbant, et en ce qu'on adjoint le gaz de balayage ayant traversé la troisième masse d'adsorbant au gaz de substitution avant que ce dernier pénètre dans ladite seconde masse d'adsorbant, chaque masse d'adsorbant étant successivement traversée par le mélange oxygène-ozone, le gaz de substitution et le gaz de balayage.

L'invention a également pour objet un appareil destiné à la mise en oeuvre d'un tel procédé. Cet appareil est caractérisé en ce qu'il comprend :

- une enveloppe contenant un lit annulaire de matière adsorbante divisé en un certain nombre de secteurs;

- des cloisons délimitant quatre espaces communiquant respectivement avec un premier orifice d'entrée de mélange oxygène-ozone, un second orifice de sortie d'oxygène, un troisième orifice d'entrée de gaz de substitution et un quatrième orifice de sortie de gaz de production constitué essentiellement du gaz de substitution et d'ozone, ces cloisons faisant communiquer ledit second orifice avec le côté aval, vis-à-vis de l'adsorption, d'un premier ensemble de secteurs , ledit premier orifice avec le côté amont, vis-à-vis de l'adsorption, d'un second ensemble de secteurs constitué dudit premier ensemble et d'un troisième ensemble de secteurs adjacent à ce premier ensemble, ledit quatrième orifice avec le côté aval, vis-à-vis de la désorption à contre-courant, d'un quatrième ensemble de secteurs constitué des secteurs restants, et ledit troisième orificeavec le côté amont vis-à-vis de la désorption, desdits troisième et quatrième ensembles de secteurs; et

- des moyens pour effectuer une rotation relative entre le lit annulaireet lesdites cloisons dans un sens tel que chaque secteur fasse successivement et cycliquement partie desdits premier, quatrième et troisième ensembles.

Quelques exemples de mise en oeuvre de l'invention vont maintenant être décrits en regard des dessins annexés, sur lesquels :

- la figure 1 est un schéma de principe d'une installation de production d'ozone conforme à l'invention ;
- la figure 2 est un diagramme illustrant le fonctionnement de cette installation ; la figure 3 est un schéma de principe d'une autre installation de production d'ozone conforme à l'invention ;
- la figure 4 est un diagramme illustrant le fonctionnement de l'installation de la figure 3 ;
- les figures 5A et 5B représentent ensemble schématiquement une installation complète correspondant au schéma de la figure 3 ;
- les figures 6 et 7 reprennent plus en détail le schéma de la figure 1, suivant deux variantes.
- la figure 8 représente en coupe transversale de dessus un appareil destiné à la mise en oeuvre d'un procédé conforme à l'invention, la coupe étant prise suivant la ligne VIII-VIII de la figure 9;
- les figures 9 et 10 représentent l'appareil de la figure 8 en coupe longitudinale, respectivement suivant les lignes X-X et XI-XI de cette figure ;
- la figure 11 montre l'utilisation d'un appareil tel que représenté aux figures 8 à 10 dans une installation conforme à la figure 6 ;
- la figure 12 est une vue en coupe longitudinale d'un autre appareil destiné à la mise en oeuvre d'un procédé conforme à l'invention ;
- les figures 13 à 16 sont des vues prises en coupe respectivement suivant les lignes XIV-XIV à XVII-XVII de la figure 12 ;
et la figure 17 est une vue analogue à la figure 12 d'une variante.

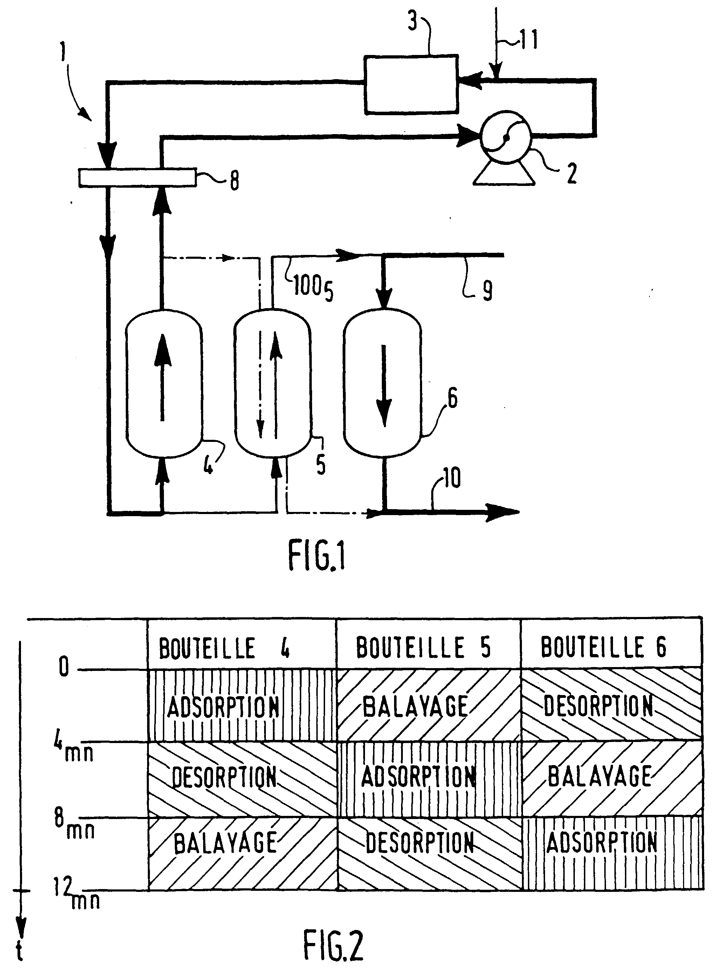

La figure 1 représente le principe d'une installation de production d'ozone à partir d'oxygène à une seule boucle d'ozonisation 1. Cette installation comprend essentiellement un compresseur "Roots" 2, un ozoneur 3 de tout type approprié et trois bouteilles d'adsorption 4, 5, 6 emplies de gel de silice.

A chaque instant, de l'oxygène circule dans la boucle 1 de la façon suivante : l'oxygène, comprimé de 1,3 bar (1 bar = une pression absolue de $10^5$ Pa) à 1,5 bar par le compresseur 2, est partiellement ozonisé par l'ozoneur 3, d'où sort un mélange oxygène-ozone à environ 3 % en volume d'ozone ; ce mélange pénètre par le bas dans une des trois bouteilles, par exemple dans la bouteille 4, où l'ozone est piégé par adsorption, la circulation s'effectuant dans un sens dit co-courant ; et l'oxygène sortant du haut de la bouteille 4 retourne au compresseur.

Par ailleurs, un gaz porteur ou de substitution, qui peut être de l'azote impur (mélangé à de l'oxygène) ou de l'air sec et qui sera dénommé dans la suite "azote" par commodité, pénètre par une conduite 9 à contre-courant dans une autre bouteille, par exemple la bouteille 6, pour effectuer la désorption de l'ozone, et un mélange de ce gaz et d'ozone ressort de la bouteille 6 par une conduite 10 en constituant le courant de production.

Pendant ce temps, la troisième bouteille (bouteille 5) est purgée par balayage à co-courant en dérivant une partie du mélange oxygène-ozone, juste avant son entrée dans la bouteille 4 ; l'ozone est piégé dans la bouteille 6, et c'est un mélange d'azote et d'oxygène qui sort de cette bouteille ; ce mélange est adjoint, via une conduite $100_5$, au courant principal d'azote de la conduite 9. La perte de gaz de la boucle 1 due à la production d'ozone et à ce balayage est compensée par un appoint d'oxygène en 11, entre la sortie de la bouteille 4 et l'entrée de l'ozoneur 3. On remarque que le flux de gaz de balayage effectue en même temps le début de la phase d'adsorption de la bouteille 5.

Pour améliorer l'adsorption de l'ozone sans atteindre cependant le risque de voir apparaître ce corps à l'état liquide, très instable, on introduit le mélange oxygène-ozone dans la bouteille 4 à une température de - 90°C, et l'oxygène sortant de cette bouteille à environ - 80°C est mis en relation d'échange thermique avec le mélange sortant de l'ozoneur dans un échangeur de chaleur 8. L'installation nécessite un appoint de froid, qui peut être apporté de plusieurs manières différentes, comme on le décrira plus loin.

L'installation comporte des moyens (non représentés) de commutation entre les trois bouteilles 4 à 6, et fonctionne suivant le cycle illustré à la figure 2 : chaque bouteille fonctionne successivement en adsorption à co-courant (bouteille 4 de la figure 1), en désorption à contre-courant (bouteille 6 de la figure 1) et en balayage à co-courant (bouteille 5 de la figure 1), et ces trois phases ont la même durée, par exemple de 4 minutes.

A titre d'exemple d'ordre de grandeur, avec à peu près les mêmes conditions de pression et de température dans les trois bouteilles 4 à 6, si un débit de 1000 Nm$^3$/h (mètres cubes normaux par heure) d'oxygène est traité par l'ozoneur, la sortie azote + ozone de production a un débit du même ordre, le débit de balayage dans la bouteille 5, recyclé vers la bouteille 6, est de l'ordre de 45 Nm$^3$/h, et l'appoint en oxygène en 7 est de l'ordre de 90 Nm$^3$/h.

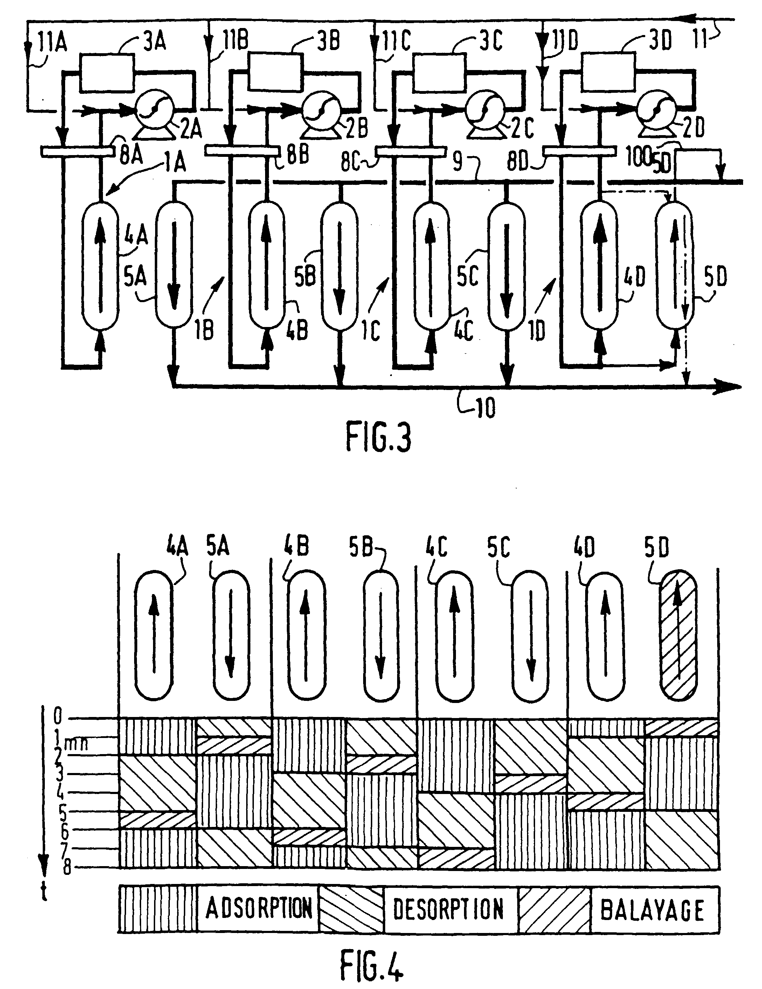

L'installation schématisée à la figure 3 est de type modulaire, c'est-à-dire qu'elle comporte plusieurs boucles d'ozonisation indépendantes 1A à 1D. Ceci présente des avantages importants du point de vue de la fiabilité (disposition des boucles dans des locaux individuels facilitant l'entretien boucle par boucle) et l'adaptation à des besoins variables en ozone. De plus, grâce à un couplage de toutes les boucles pour la désorption et le balayage, on réduit le nombre de bouteilles d'adsorbant de trois à deux pour chaque boucle, de la manière suivante.

Chaque boucle 1A à 1D comprend comme précédemment, respectivement, un compresseur "Roots" 2A à 2D, un ozoneur 3A à 3D et un échangeur de chaleur 8A à 8D. A chaque boucle sont associées deux bouteilles de gel de silice 4A, 5A à 4D, 5 D. Il existe un collecteur 9 d'arrivée de gaz porteur, dénommé "azote" comme précédemment, un collecteur 10 de sortie de mélange azote-ozone, et un collecteur 11 d'appoint d'oxgène. Les collecteurs 9 et 10 peuvent respectivement être reliés sélectivement à l'entrée supérieure et à l'entrée inférieure de chaque bouteille, tandis que le collecteur 11 est relié en permanence, par quatre dérivations 11A à 11D, aux quatre boucles 1A à 1D en amont du compresseur. Ceci assure un débit constant d'oxygène dans le compresseur et dans l'ozoneur.

A chaque instant, quatre bouteilles (ici 4A à 4D) fonctionnent en adsorption à co-courant, trois bouteilles (ici 5A à 5C) fonctionnent en désorption à contre-courant par l'azote, et une bouteille (ici 5D) fonctionne en balayage par dérivation du mélange $O_2$-$O_3$ avant son entrée dans la bouteille associée 4D. Pour compenser ce balayage, chaque dérivation du collecteur 11 alimentant les quatre boucles fournit à la boucle comportant un balayage un débit supplémentaire correspondant d'oxygène. L'entrée supérieure de chaque bouteille peut être reliée par ne conduite telle que $100_{5D}$ au collecteur 9 pour récupérer le débit de balayage dans le gaz porteur.

L'installation comporte des moyens de commutation (non représentés) qui assurent un fonctionnement cyclique de toutes le bouteilles, comme illustré à la figure 4 : pour un cycle de 8 minutes, chaque bouteille assure successivement une phase d'adsorption à co-courant de 4 minutes, une phase de désorption à contre-courant de 3 minutes et une phase de balayage à co-courant d'une minute, les débits d'azote et de balayage étant adaptés en conséquence. Le tableau suivant résume ce fonctionnement. Dans les cases de ce tableau, "A" désigne une phase d'adsorption, "D" une phase de désorption et "B" une phase de balayage.

| Bouteille | 1 | 2 | 3 | 4 | 5 | 6 | 7 | 8 |
|---|---|---|---|---|---|---|---|---|
| Temps (mn) | | | | | | | | |
| 1 | A | D | A | D | A | D | A | B |
| 2 | A | B | A | D | A | D | D | A |
| 3 | D | A | A | B | A | D | D | A |
| 4 | D | A | D | A | A | B | D | A |
| 5 | D | A | D | A | D | A | B | A |
| 6 | B | A | D | A | D | A | A | D |
| 7 | A | D | B | A | D | A | A | D |
| 8 | A | D | A | D | B | A | A | D |

Ce principe pourra s'étendre à une installation à $n$ boucles : à chaque instant, $n$ bouteilles sont en phase d'adsorption à co-courant, (n - 1) bouteilles en phase de désorption à contre-courant, et une bouteille est en phase de balayage à co-courant. Si la durée de l'adsorption est prise comme unité, la durée de balayage est en principe $\frac{1}{n}$ et, par conséquent, la durée de désorption $\frac{n-1}{n}$. En variante, on pourrait envisager de réduire la durée de balayage et, éventuellement, augmenter d'autant la durée d'une au moins des autres phases de la boucle correspondante.

En revenant à la figure 3, en ce qui concerne le débit et avec les mêmes hypothèses globales que pour la figure 1, chaque ozoneur traite 250 Nm$^3$/h d'oxygène, chaque boucle reçoit en permanence un appoint de 45/4 Nm$^3$/h ; et le balayage, qui doit être effectué pendant une durée égale au quart de la durée d'adsorption, consomme 45 Nm$^3$/h, de sorte que la dérivation correspondante (ici 11D) fournit à la boucle 1D un complément d'oxygène de 45 Mn$^3$/h. Ce gaz de balayage est récupéré dans le collecteur 9, et de chacune des trois bouteilles en désorption sort à contre-courant un débit de $\frac{1000}{3}$ Nm$^3$/h de mélange azote-ozone.

Dans le cas de la figure 3 comme dans celui de la figure 1, la récupération du débit de balayage permet de diminuer le débit de gaz porteur à fournir. S'il s'agit d'azote impur, comme on le verra plus loin dans le cas où l'installation est couplée à un appareil de séparation d'air, c'est le débit d'azote qui définit la taille de cet appareil, et le gain, de l'ordre de 5 %, obtenu sur ce débit permet de diminuer l'investissement et l'énergie. Si le gaz porteur est de l'air, il doit être déshydraté, ce qui est coûteux, et la récupération précitée assure également un gain.

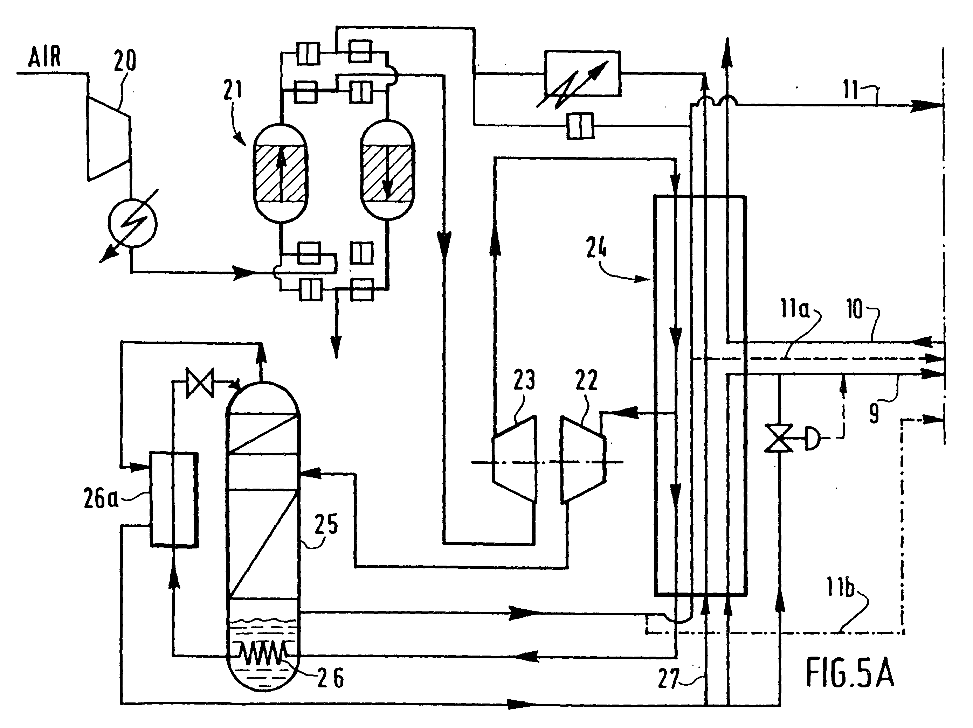

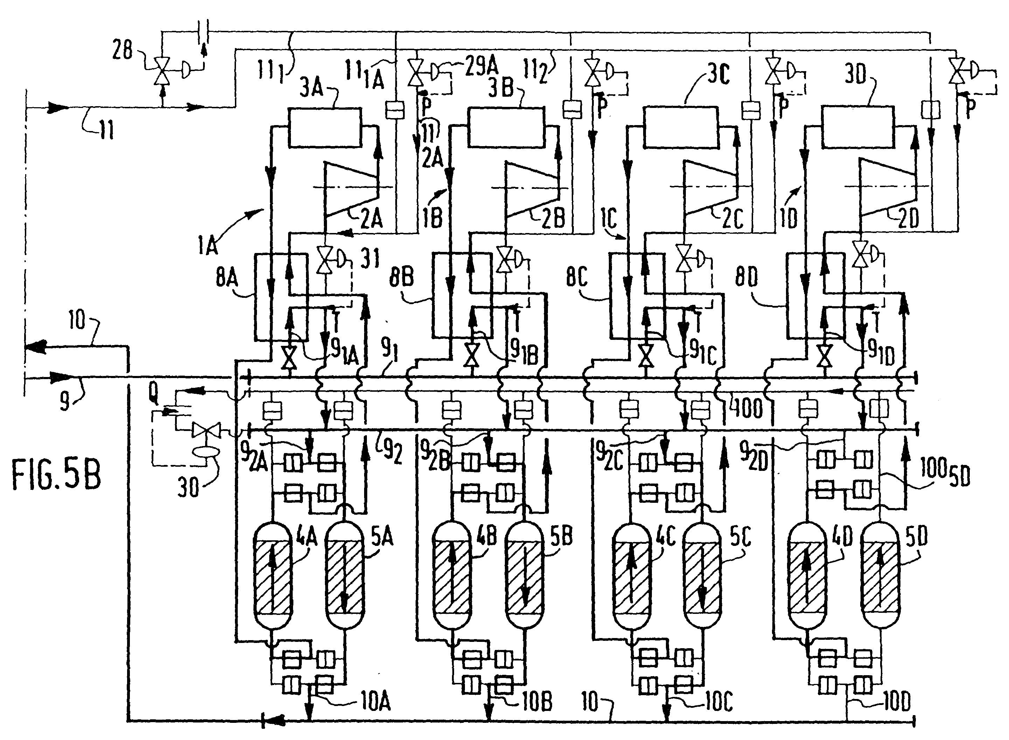

Les figures 5A et 5B représentent ensemble une installation complète de production d'ozone comprenant d'une part (figure 5A) un appareil de séparation d'air adapté à cette application, et d'autre part (figure 5B) quatre boucles agencées de la même manière qu'à la figure 3.

L'appareil de la figure 5A fournit aux quatres boucles de la figure 5B l'oxygène d'appoint, via le collecteur 11, et l'azote porteur via le collecteur 9. Il est également relié aux quatres boucles par le collecteur 10 de production transportant le mélange azote-ozone. Il fournit la totalité des gaz et du froid nécessaires pour la production de l'ozone.

Cet appareil comprend un compresseur d'air 20, un dispositif 21 d'épuration de l'air comprimé, un ensemble turbine 22 - surpresseur 23, une ligne d'échange thermique 24 et une colonne de distillation 25. L'air, comprimé à 4 bar par le compresseur 20 puis épuré, est comprimé à 5 bar par le surpresseur 23 puis est refroidi depuis la température ambiante dans la ligne d'échange 24. Une partie importante, par exemple de l'ordre de la moitié, voire plus, du débit d'air est dérivée avant d'atteindre le bout froid de cette ligne d'échange et est turbinée en 22, ce qui assure la tenue en froid de l'installation ainsi que l'entraînement mécanique du surpresseur 23. Le débit turbiné, détendu vers 1,4 bar, est introduit dans une zone intermédiaire de la colonne 25. Le reste de l'air est refroidi jusqu'à environ - 175°C, liquéfié dans un condenseur-vaporiseur de cuve 26 de la colonne puis détendu à 1,4 ata et injecté au sommet de cette dernière.

Ainsi, la colonne 25 produit en cuve de l'oxygène à une pureté comprise entre 95 % et 99,5 % et en tête un gaz résiduaire R constitué d'azote et de 10 à 15 % d'oxygène. C'est ce gaz qui constituera le gaz porteur de l'ozone et sera dénommé "azote" dans la suite pour plus de commodité. Ce gaz contribue également au sous-refroidissement de l'air dans un échangeur de chaleur 26a associé à la colonne.

L'azote soutiré en tête de la colonne est réchauffé dans la ligne d'échange 24 à contre-courant de l'air jusqu'à environ - 90°C puis passe dans le collecteur 9. Le mélange de production azote-ozone pénètre sensiblement au même niveau dans la ligne d'échange 24 et se réchauffe à contre-courant de l'air jusqu'à la température ambiante, sous environ 1,1 ata. Une partie de l'azote, dérivée dans une conduite 27 avant d'entrer dans la ligne d'échange, traverse celle-ci de bout en bout et sert à la régénération des bouteilles d'adsorbant du dispositif d'épuration 21.

On retrouve à la figure 5B les éléments de la figure 3, avec en plus le détail des échangeurs de chaleur 8A à 8D et des moyens de circulation des gaz, qui se retrouvent de façon similaire dans toutes les boucles.

Le collecteur d'azote 9 est en fait dédoublé en un premier collecteur $9_1$ et un deuxième collecteur $9_2$. Pour chaque boucle, par exemple la boucle A, une dérivation $9_{1A}$ réchauffe l'azote jusqu'à environ - 80°C dans l'échangeur 8A à contre-courant du mélange $O_2$ - $O_3$, puis débouche dans le collecteur $9_2$, d'où l'azote peut se distribuer dans les trois bouteilles en désorption (ici 5A à 5C) par des dérivations $9_{2A}$ à $9_{2C}$, puis en ressortir par des dérivations 10A à 10C du collecteur 10.

Le collecteur 11 d'oxygène comporte deux branches : une branche $11_1$, commandée par une vanne 28 à débit constant, d'où partent quatre dérivations $11_{1A}$, ... débouchant dans chaque boucle juste en amont du compresseur 2 correspondant ; et une branche $11_2$ d'où partent quatre dérivations $11_{2A}$, .... commandées par des vannes 29A, ... asservies à la pression de la boucle correspondante et débouchant également juste en amont du compresseur 2 correspondant.

En considérant la boucle 1A, le mélange oxygène-ozone sortant de l'ozoneur 3A est refroidi à - 90°C en traversant de bout en bout l'échangeur 8A à contre-courant de l'azote, traverse la bouteille (ici 4A) en adsorption, en ressort vers - 80°C, pénètre à cette température dans l'échangeur 8A, s'y réchauffe à contre-courant du mélange oxygène-ozone et retourne à la température ambiante au compresseur 2A.

Comme on l'a vu précédemment, trois boucles comportent une bouteille en phase de désorption par l'azote, tandis que la quatrième (ici 1D) comporte une bouteille (ici 5D) en phase de balayage. Pour cela, du mélange oxygène-ozone est dérivé de la boucle avant de pénétrer dans la bouteille 4D en adsorption et traverse à co-courant la bouteille 5D, puis rejoint par la conduite $100_{5D}$ un collecteur de récupération 100. Celui-ci débouche dans le collecteur $9_2$ par l'intermédiaire d'une vanne 30 à débit constant réglée sur le même débit que la vanne 28. Ainsi, à tout instant, le débit de balayage est compensé par un débit égal injecté dans la boucle par la dérivation correspondante $11_1$ (ici $11_{1D}$), et toute éventuelle différence de débit est compensée par l'intervention de la vanne 29 correspondante (ici 29D) qui ramène à la valeur de consigne la pression de la boucle à l'entrée du compresseur "Roots" (ici 2D).

La figure 5B montre également l'ensemble des conduites de liaison et des électrovannes qui permettent la circulation des gaz et la permutation des rôles des bouteilles, de la manière expliquée plus haut. On a encore illustré, pour chaque boucle, un by-pass 31 d'oxygène ; grâce à celui-ci, un débit d'oxygène froid peut éviter l'échangeur 8A, ... afin d'effectuer un réglage de température, ce débit étant asservi à la température de l'azote sortant de l'échangeur.

Lorsque l'installation est en régime permanent, on a vu que l'appoint d'oxygène nécessaire est relativement faible, tandis que le débit d'azote est du même ordre de grandeur que le débit circulant dans les boucles. C'est en général ce débit d'azote qui impose la taille de l'appareil de séparation d'air.

Pour diminuer ce débit d'azote et, par suite, réduire l'investissement et l'énergie, on peut penser, la phase de désorption, utiliser soit de l'azote plus chaud, soit de l'azote à plus basse pression (par rapport à la pression de la phase d'adsorption). Cependant, la première solution est à écarter du fait de la brève durée des diverses phases, qui ne permet pas de jouer sur les températures ; il ne reste donc que la seconde solution, qui peut se réaliser en augmentant la pression de marche des ozoneurs, la pression de désorption étant fixée par la pression d'utilisation du mélange azote-ozone (ici 1,1 bar environ). En variante, on peut aussi diminuer la pression de désorption en plaçant dans la conduite 10 une machine de compression qui refoule à la pression d'utilisation désirée. Pour une teneur en ozone de 3 à 5 % molaire, on pourrait ainsi utiliser une pression d'adsorption de 1,1 à 2,5 ata et une pression de désorption comprise entre 0,5 et 1,5 ata. Un autre avantage éventuel de la désorption à pression inférieure à celle de l'adsorption est une concentration en ozone plus élevée dans le gaz de production R + $O_3$ sensiblement majorée dans le rapport inverse des pressions absolues.

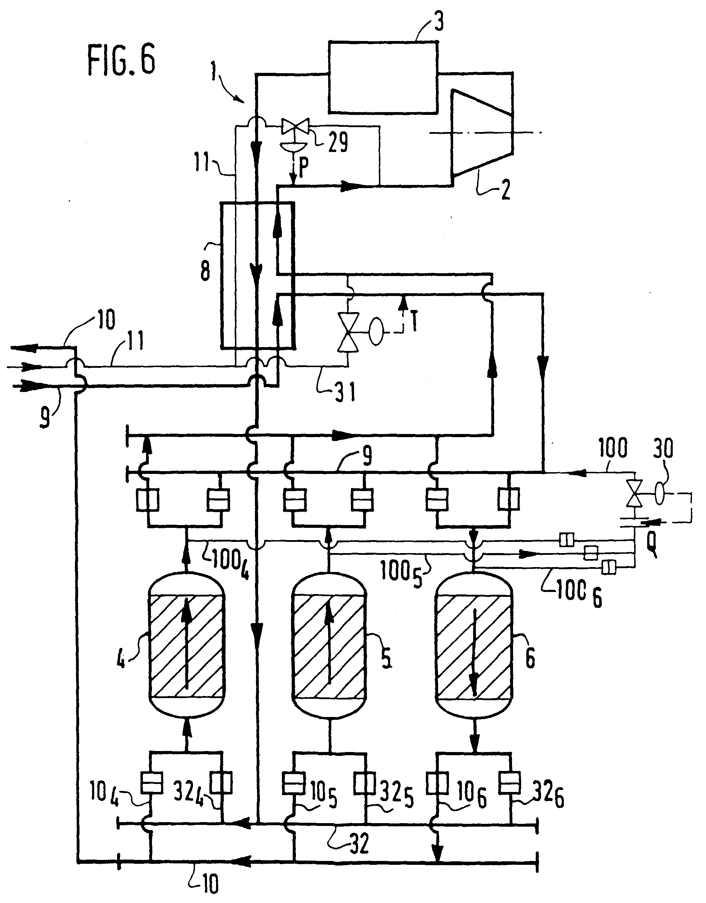

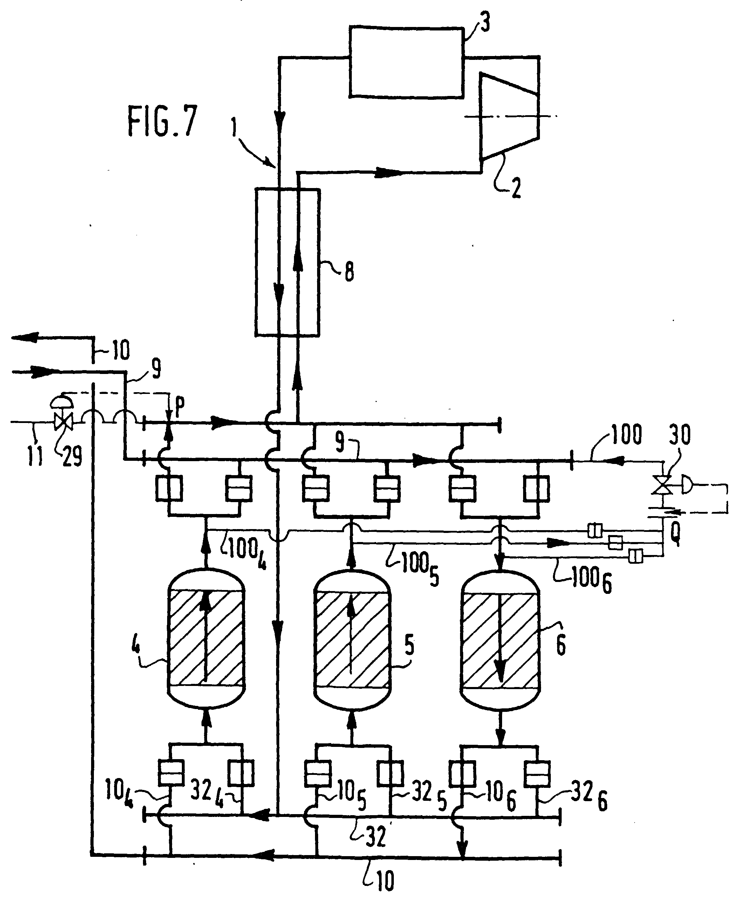

On a illustré aux figures 6 et 7 d'autres variantes d'amenée du froid aux bouteilles d'adsorption, le choix dépendant des divers paramètres de chaque application, par exemple de la longueur des conduites de liaison entre l'appareil de séparation d'air et le site des boucles d'ozonisation. On a représenté ces deux variantes dans le cas d'une installation à une seule boucle, correspondant au schéma de la figure 1, couplée à l'appareil de séparation d'air de la figure 5A.

A la figure 6, on retrouve la boucle 1 avec le compresseur "Roots" 2, l'ozoneur 3, les trois bouteilles d'adsorbant 4 à 6, l'échangeur de chaleur 8 et les collecteurs 9 d'azote, 10 de mélange azote-ozone et 11 d'oxygène d'appoint.

Dans ce cas, comme il n'y a qu'une seule boucle d'ozonisation, le collecteur 9 n'est pas dédoublé ; l'azote est simplement réchauffé jusqu'à environ - 80°C dans l'échangeur 8 puis envoyé à la bouteille (ici 6) en désorption, et le mélange azote-ozone est récupéré par le collecteur 10. Le mélange oxygène-ozone circulant dans la boucle traverse la bouteille en adsorption (ici 4) et pénètre dans l'échangeur 8 au niveau de température (environ - 80°C) où en sort l'azote de désorption, puis est réchauffé jusqu'à la température ambiante et renvoyé au compresseur 2. C'est le débit de balayage dérivé de la boucle qui traverse la troisième bouteille (ici 5) via un collecteur 32 et une dérivation $32_5$ et est récupéré par une conduite $100_5$ dans le collecteur 9, en aval de l'échangeur 8. Les trois conduites $100_4$, $100_5$ et $100_6$ se rejoignent pour former le collecteur de récupération 100, commandé par la vanne 30 à débit constant.

De même que le collecteur 9, le collecteur 11 comporte une seule branche. L'oxygène d'appoint sort de la ligne d'échange 24 de la figure 5A au même niveau de température que l'azote, soit environ - 90°C, comme indiqué en trait interrompu en 11$\underline{a}$ à la figure 5A, et est réchauffé jusqu'à la température ambiante dans l'échangeur 8, à contre-courant du mélange oxygène-ozone, avant d'être injecté dans la boucle 1, par l'intermédiaire de la vanne 29 asservie à la pression de cette boucle. On retrouve également un by-pass 31 de réglage de température.

La variante de la figure 7 diffère de la précédente par le fait que le refroidissement du mélange oxygène-ozone de la boucle 1 est entièrement assuré à contre-courant par l'oxygène d'appoint, lequel est amené par le collecteur 11 sous forme gazeuse mais à son point de rosée, soit environ - 175°C, comme indiqué en trait mixte en 11b à la figure 5A, voire même à l'état liquide, et injecté dans la boucle au bout froid de l'échangeur 8. Dans ce cas, l'azote est extrait de la ligne d'échange 24 directement à la température de désorption, soit environ - 80°C. Afin d'éviter le risque d'apparition au point d'injection de l'oxygène d'une phase liquide riche en ozone, l'appoint de gaz froid a été fait non pas directement dans le mélange oxygène-ozone avant son introduction dans l'adsorbeur 4, mais dans le fluide sortant de ce dernier, donc dans un fluide à très faible concentration en ozone.

Le procédé tel qu'il a été décrit permet d'obtenir dans un débit maintenu constant de gaz de substitution une teneur en ozone pratiquement constante du début à la fin de la phase de désorption, avec cependant une légère chute régulière de cette teneur fonction du dimentionnement des adsorbeurs et de la durée des phases. La solution à n boucles d'ozonisation (figure 3 et figure 5B) conduit, du fait du décalage dans le temps des mises en phase de désorption des bouteilles des différentes boucles, à une réduction dans le rapport n de la baisse de teneur en ozone par rapport à une installation à une seule boucle.

Si l'utilisateur est intéressé non pas tant par une teneur constante, mais par une quantité constante d'ozone délivrée, le procédé permet d'assurer cette constance de la production en modulant le débit de gaz de substitution au cours de la phase de désorption de façon à compenser la légère baisse de teneur par une augmentation sensiblement proportionnelle du débit.

On peut aussi utiliser la même propriété du système, à savoir la présence permanente d'un ballast massif d'ozone dans les adsorbeurs, pour faire face à une augmentation instantanée de la demande en ozone : il suffit d'augmenter instantanément le débit de gaz de substitution envoyé en désorption pour augmenter sensiblement dans les mêmes proportions la production d'ozone ; bien entendu, on augmentera simultanément la production d'ozone à l'ozoneur, par augmentation du débit d'oxygène à teneur en ozone constante ou par augmentation de la teneur en ozone à débit d'oxygène constant, selon le mode de réglage préféré, mais le fait de prélever sur le ballast d'ozone permet de répondre instantanément à la demande, sans attendre le temps d'un cycle. il en est de même lors d'une diminution de la demande en ozone. Si l'on agit sur l'ozoneur par variation du débit d'oxygène à teneur constante en ozone, le nouveau régime à l'équilibre sera obtenu avec un gaz de substitution à teneur inchangée, mais à débit modifié aussi longtemps que la demande ne varie pas à nouveau.

Si au contraire on agit sur l'ozoneur par variation de la teneur en ozone à débit d'oxygène inchangé, le nouveau régime à l'équilibre sera obtenu avec un gaz de substitution à teneur en ozone modifié, mais à débit inchangé ; le débit n'aura été modifié que provisoirement, le temps de reconstituer dans les adsorbeurs le ballast d'ozone correspondant au nouveau régime de fonctionnement.

Il est à noter que l'association d'un appareil de distillation d'air et d'une installation de production d'ozone permet d'adsorber l'ozone dans une plage de températures optimale (-50°C à -110°C environ) inférieure à celles que l'on peut atteindre au moyen des machines frigorifiques industrielles disponibles dans le commerce.

On va maintenant décrire des appareils qui permettent de mettre en oeuvre les procédés expliqués ci-dessus, en mettant en particulier à profit les caractères spécifiques de ces procédés : pression d'adsorption voisine de la pression de désorption; possibilité d'adjoindre de l'oxygène au mélange de production azote-ozone (le seul inconvénient étant le coût de l'oxygène ainsi perdu pour la boucle d'ozonisation), mais nécessité de ne pas laisser des quantités notables d'azote pénétrer dans la boucle d'ozonisation pour ne pas enrichir progressivement celle-ci en azote jusqu'au-delà d'une valeur limite acceptable pour le bon fonctionnement de l'ozoneur.

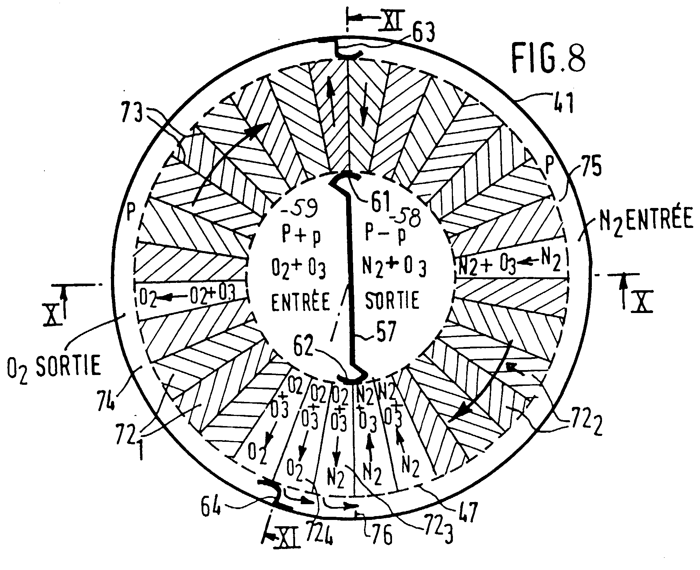

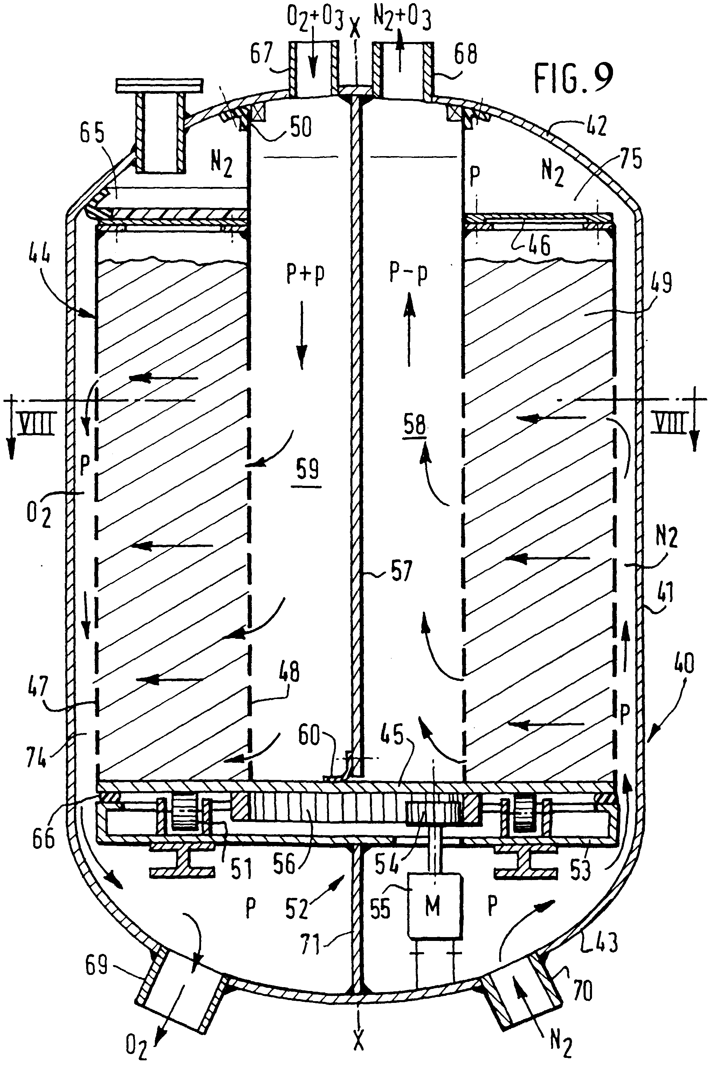

L'appareil représenté aux figures 8, 9 et 10 comprend une enveloppe extérieure 40, constituée d'une virole cylindrique 41 d'axe X - X vertical et de deux fonds bombés supérieur 42 et inférieur 43, dans laquelle est monté coaxialement un équipage rotatif 44. ce dernier comporte un support inférieur horizontal 45 en forme de plaque circulaire, un couvercle supérieur annulaire 46 et deux grilles cylindriques, extérieure 47 et intérieure 48, entre lesquelles est disposé un lit annulaire 49 de matière adsorbante. La grille 47 relie les périphéries extérieures du support 45 et du couvercle 46, tandis que la grille 47 traverse l'ouverture centrale de ce couvercle et est guidée à rotation à son extrémité supérieure par un roulement étanche 50 solidaire du fond 42 de l'enveloppe.

Les deux grilles sont perforées sur toute leur hauteur sauf dans leur partie supérieure, à partir d'un niveau situé un peu au-dessous du couvercle 46. Le support 45 est monté sur un roulement circulaire 51 à galets porté par le fond inférieur 43 de l'enveloppe par l'intermédiaire d'une ossature métallique 52 comprenant un plancher 53. L'équipage 44 peut être entraîné en rotation autour de l'axe X-X par un pignon 54 relié à un moteur 55 intérieur à l'enveloppe et attaquant une couronne dentée 56 fixée sous le support 45.

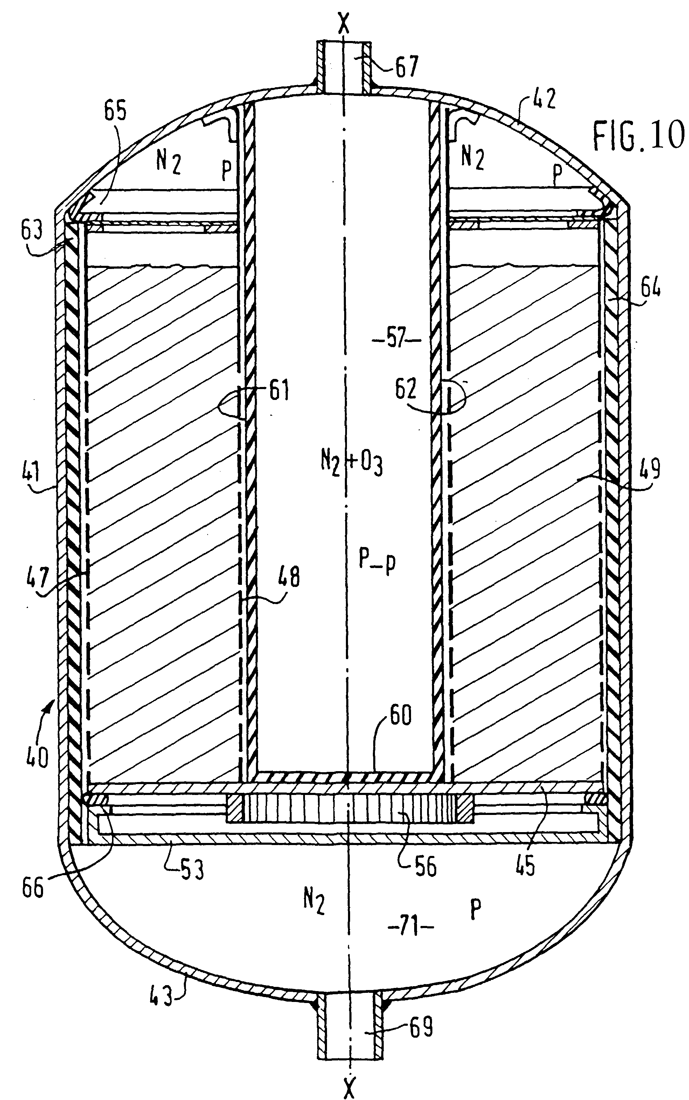

Une cloison radiale 57 divise l'espace intérieur de la grille 48 en deux demi-espaces 58,59. Cette cloison est fixée au fond supérieur 42 et frotte d'une part, le long de son bord inférieur, sur le support 45 par l'intermédiaire d'une raclette d'étanchéité 60, d'autre part, le long de chaque bord longitudinal, sur la grille 48 par l'intermédiaire de deux râclettes d'étanchéité 61, 62 (figures 8 et 10).

De plus, l'espace situé entre l'équipage rotatif 44 et l'enveloppe 40 est divisé en deux de la manière suivante.

D'une part, il est prévu, sur toute la hauteur de l'équipage 44, du couvercle 46 au plancher fixe 53, deux cloisons radiales (figure 8) : une cloison radiale 63 coplanaire à la cloison 57, et une autre cloison radiale 64 décalée angulairement d'un angle aigu dans le sens horaire (en considérant la figure 8) par rapport à l'emplacement 76. Chacune des cloisons 63 et 64 est fixée par son bord extérieur à la virole 41 et frotte par une râclette d'étanchéité sur la grille 47.

D'autre part, il est prévu deux joints d'étanchéité s'étendant chacun dans un plan horizontal sur un peu plus d'un demi-cercle, de la cloison 63 à la cloison 64. Le joint supérieur 65 est fixé au fond supérieur 42 de l'enveloppe et frotte sur la périphérie extérieure du couvercle 46, tandis que le joint inférieur 66 est fixé sur la face supérieure du plancher 53 et frotte sur la périphérie extérieure du support 45.

Pour la distribution des gaz, le sommet du fond supérieur 42 comporte deux orifices 67,68 débouchant à l'intérieur de la grille 48, de part et d'autre de la cloison 57, tandis que le fond inférieur 43 présente deux orifices 69,70 débouchant sous le support 45, de part et d'autre d'une cloison radiale 71 qui fait partie de l'ossature 52. Le lit d'adsorbant 49 est par ailleurs divisé en de multiples secteurs 72 (au nombre de trente-deux dans l'exemple représenté) par des plaques radiales 73 (figure 8) reliant les deux grilles.

Ainsi, l'espace compris entre l'équipage 44 et l'enveloppe 40 est divisé de façon étanche en un demi-espace 74 qui communique seulement avec l'orifice 69 et, à travers une partie des secteurs 72 du lit d'adsorbant, avec l'orifice 67, et en un demi-espace 75 qui communique seulement avec l'orifice 70 et, à travers une autre partie des secteurs 72, avec l'orifice 68.

Cet appareil est utilisé de la façon suivante pour mettre en oeuvre un procédé analogue à celui illustré en trait mixte à la figure 1, l'appareil remplaçant les trois bouteilles illustrées sur cette figure.

L'orifice 67 est relié à la boucle 1, en aval de l'échangeur de chaleur 8, de sorte qu'il est alimenté en permanence par le mélange oxygène-ozone refroidi par cet échangeur .L'orifice 68 est relié à la conduite de gaz de production 10. L'orifice 69 est relié à la boucle 1, en amont du retour dans l'échangeur 8. L'orifice 70 est relié à la conduite 9 d'alimentation en azote. L'équipage 44 est entraîné en rotation à vitesse constante dans le sens horaire de la figure 8.

On supposera que l'oxygène à l'orifice 69 et l'azote à l'orifice 70 sont sensiblement à la même pression P, par exemple légèrement supérieure à la pression atmosphérique ; compte tenu d'une perte de charge p, par exemple de l'ordre de 30 mb, à la traversée du lit 49, on aura une pression P + p à l'orifice 65 et P - p à l'orifice 68, ce qui impose les sens de circulation des gaz.

Les cloisons 57,63 et 64 (figure 8) répartissent les secteurs 72 en trois catégories :

- de la cloison 63 à l'emplacement diamétralement opposé 76, en tournant dans le sens antihoraire, la moitié de ces secteurs, référencés $72_1$, sont traversés radialement de l'intérieur vers l'extérieur par le mélange oxygène-ozone, qui s'appauvrit progressivement en ozone du fait de l'adsorption pour laisser sortir dans le demi-espace extérieur 74 de l'oxygène pur ;

- de la même cloison 63 à la cloison 64, en tournant dans le sens horaire, un peu moins de la moitié restante des secteurs 72, référencés $72_2$, sont traversés de l'extérieur vers l'intérieur par de l'azote, qui s'enrichit progressivement en ozone pour délivrer dans le demi-espace intérieur 58 en regard un mélange azote-ozone constituant le produit de l'installation ;

- un secteur 72, ou un petit nombre de secteurs 72 (au nombre de deux, référencés $72_3$ et $72_4$ sur la figure 8), situé(s) entre la cloison 64 et l'emplacement 76. Ce ou ces secteurs sont alimentés par l'intérieur (espace 59) par une partie du mélange oxygène-ozone qui s'appauvrit en ozone et balaie l'azote encore présent, dans ces secteurs 72.

Ainsi, si l'on considère un secteur 72 donné, tournant sur un tour complet à partir de l'emplacement 76 :

- de cet emplacement 76 jusqu'à la cloison 63, ce secteur subit une phase d'adsorption de l'ozone du mélange oxygène-ozone refroidi sortant de l'échangeur de chaleur 8 (figure 1) et introduit dans le demi-espace central 59 par l'orifice 67 ;

- de la cloison 63 à l'emplacement 76, le même secteur 72 est désorbé à contre-courant (c'est-a-dire radialement de l'extérieur vers l'intérieur) par de l'azote introduit dans le demi-espace extérieur 75 par l'orifice 70, avec en addition le mélange oxygène-azote provenant des secteurs $72_3$ et $72_4$.

- Entre l'emplacement 76 et la cloison 64, le ou les secteurs $72_3$ , $72_4$ sont en phase de balayage à co-courant (radialement de l'intérieur vers l'extérieur) par le mélange oxygène-ozone provenant du demi espace central 59 et le mélange oxygène-azote qui en ressort parvient dans le demi espace extérieur 75 et se mélange avec l'azote qui alimente ce dernier pour participer avec cet azote à la désorption à contre-courant des N/2 secteurs compris entre la cloison 63 et l'emplacement 76.

En considérant l'ensemble des N secteurs 72, on a à chaque instant N/2 secteurs en désorption, $n$ secteurs en balayage-adsorption (nombre de secteurs compris entre la cloison 64 et l'emplacement 76) et (N/2) - n secteurs en adsorption. L'installation fournit ainsi en permanence un débit constant de mélange constitué essentiellement d'azote et d'ozone, sans qu'aucune vanne de commutation soit nécessaire.

Comme on le comprend, on peut régler la durée relative de chaque phase d'adsorption, de désorption et de balayage-adsorption par le choix du décalage angulaire entre la cloison 64 et le plan des cloisons 57 et 63, et la durée absolue de chaque phase par le choix de la vitesse de rotation de l'équipage 44.

On remarque que les roulements 50 et 51 ainsi que le pignon 54 et son moteur d'entraînement 55 sont entièrement contenus dans le demi-espace 75, et donc sous atmosphère d'azote, ce qui est avantageux pour leur bon fonctionnement et pour la sécurité.

On comprend donc que l'appareil de la figure 8, en remplaçant les trois bouteilles 4 à 6 de la figure 1, permet de mettre en oeuvre le procédé illustré en trait plein sur cette figure 1, sans qu'aucune vanne de commutation soit nécessaire.

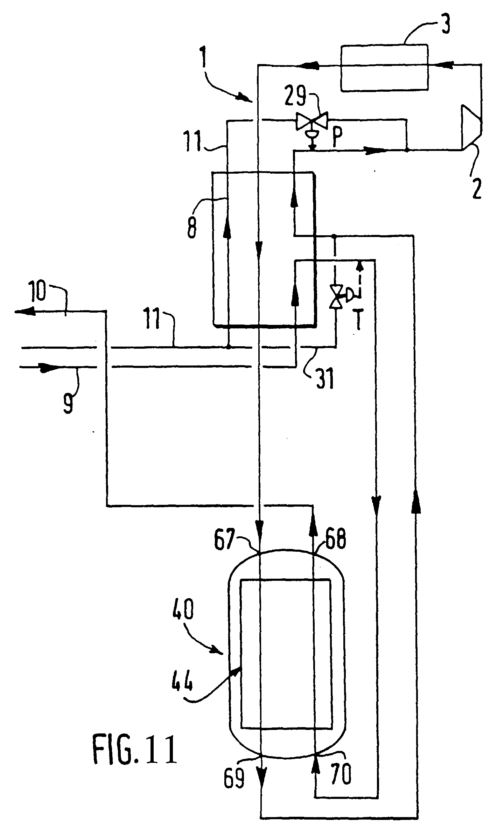

Cette simplification de l'installation, qui a pour conséquence une réduction considérable des risques de fuites, est représentée sur la figure 11, qui reprend à titre d'exemple le schéma de la figure 6, avec les mêmes numéros de reférence, mais utilise l'appareil à lit d'absorbant rotatif de la manière expliquée ci-dessus.

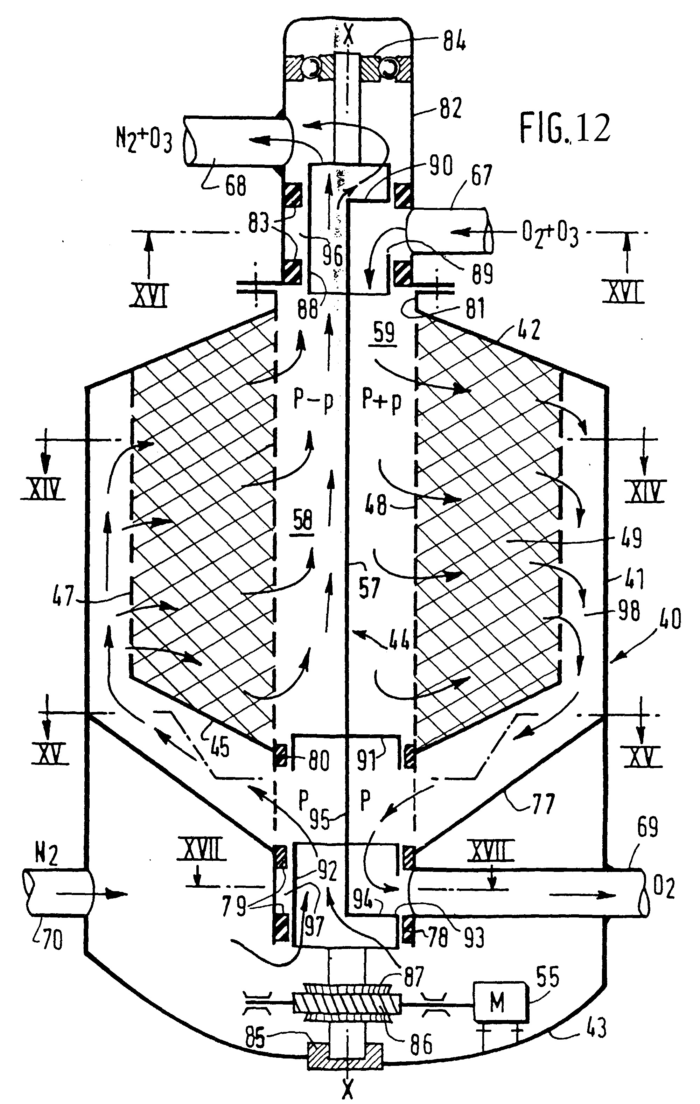

L'appareil représenté aux figures 12 à 14 est basé sur le même principe général que ceux des figures 8 à 10, les éléments correspondants portent les mêmes numéros de référence : un lit annulaire d'adsorbant 49 délimité par deux grilles extérieure 47 et intérieure 48 est divisé en N secteurs 72 par des plaques radiales 73 s'étendant entre ces deux grilles, et chacun de ces secteurs est mis successivement en communication avec une alimentation en mélange oxygène-ozone, avec une alimentation en azote et avec une alimentation en un gaz de balayage qui est, dans l'exemple représenté, de l'oxygène. La différence essentielle réside dans le fait que, maintenant, le lit 49 est fixe tandis que l'appareil comprend un noyau tournant, constituant l'équipage rotatif 44, qui assure la distribution désirée des trois gaz entre les secteurs 72.

Plus précisément, l'enveloppe 40 comporte dans sa partie inférieure un double fond 77 convergent vers le bas qui se termine, à son extrémité inférieure, par un cylindre ouvert 78. Une tubulure constituant l'orifice 69 part radialement de ce cylindre et traverse à joint étanche la virole 41, et deux joints d'étanchéité annulaires 79 sont fixés dans le cylindre 78, au-dessus et au-dessous de cette tubulure . L'orifice 70 débouche dans l'espace compris entre le fond inférieur 43 et le double fond 77.

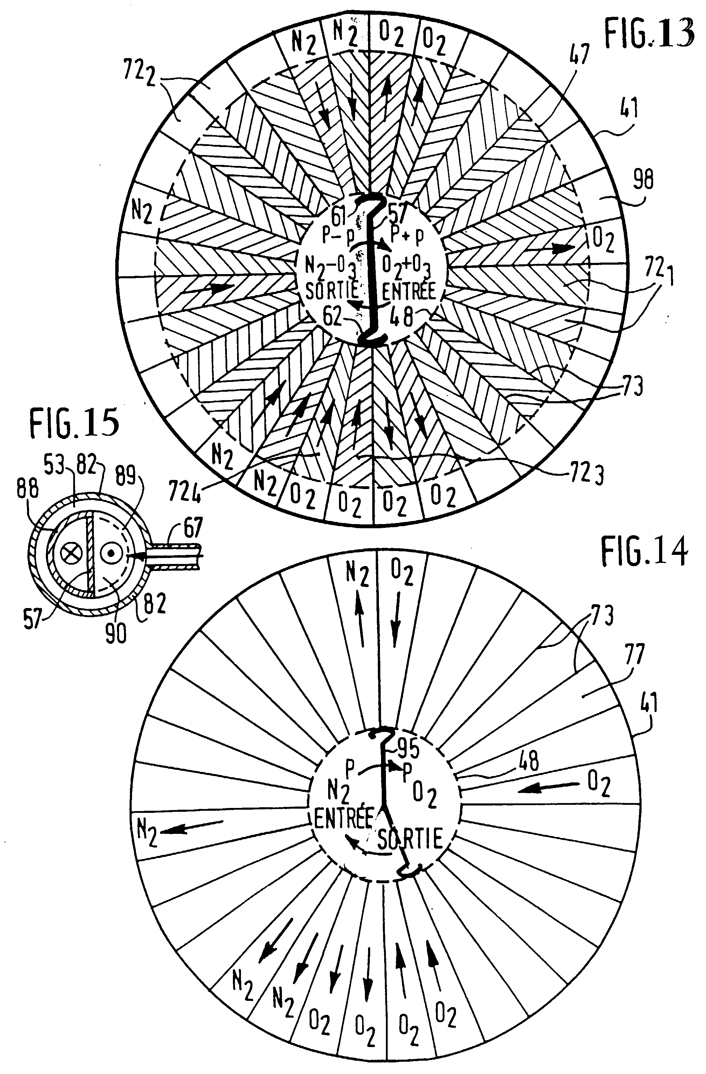

Les deux grilles 47 et 48 sont reliées à leur sommet par le fond supérieur 42 et à leur base par le support 45, qui est ici à peu près tronconique et parallèle au double fond 77. La grille intérieure 48 se prolonge vers le bas jusqu'au cylindre 78, et un joint d'étanchéité annulaire 80 est fixé dans la grille 47 au niveau du raccordement entre celle-ci et le support 45. De plus, les plaques 73 se prolongent vers l'extérieur jusqu'au fond 42, à la virole 41 et au double fond 77, de sorte que c'est tout l'espace délimité par la grille 47, le fond 42, la virole 41 et le double fond 77 qui est divisé en N secteurs, comme on le voit aux figures 13 et 14.

L'enveloppe 40 présente à son sommet une ouverture 81 de même diamètre que la grille 48 et sur laquelle est fixé un dôme cylindrique 82 de même diamètre, fermé à son sommet et ouvert à sa base. Deux tubulures, constituant respectivement les orifices 67 et 68, débouchent radialement dans la partie inférieure et dans la partie supérieure, respectivement, du dôme 82. Deux joints d'étanchéité annulaires 83 sont fixés dans le dôme respectivement entre les deux tubulures 67 et 68 et au-dessous de la tubulure 67.

Le noyau tournant 44 est guidé par un roulement supérieur 84 prévu au sommet du dôme 82 et par un roulement inférieur 85 prévu au point bas du fond 83. Il est entraîné en rotation par un moteur 55 fixé sur le fond 43, à l'intérieur de l'enveloppe 40, par l'intermédiaire d'une vis sans fin 86 qui attaque une roue dentée 87 solidaire du noyau.

Près de chaque extrémité, le noyau 44 comprend un boisseau cylindrique ouvert à ses deux extrémités. Le boisseau supérieur 88 coopère par ses parties d'extrémité avec les deux joints 83 et présente entre ceux-ci une fente semi-circulaire 89 dont le bord supérieur est relié à la périphérie d'une plaquette horizontale 90 en forme de demilune ( figure 15). Du bord rectiligne et diamétral de cette plaquette 90 part vers le bas une cloison verticale diamétrale 57 dont la largeur est égale au diamètre intérieur du boisseau 88. Sur toute la hauteur de la grille 48, la cloison 57 porte deux râclettes 61, 62 qui frottent sur cette grille (figure 13) de façon à délimiter deux demi-espaces intérieurs 58 et 59. A son extrémité inférieure, la cloison 57 porte un obturateur 91 en forme de coupelle inversée 91 dont la paroi périphérique coopère avec le joint 80.

Le boisseau inférieur 92 coopère par ses parties d'extrémité avec les deux joints 79 et présente entre ceux-ci une fente 93 dont le bord inférieur est relié à la périphérie d'une plaquette horizontale 94 située à l'aplomb de la plaquette 90.

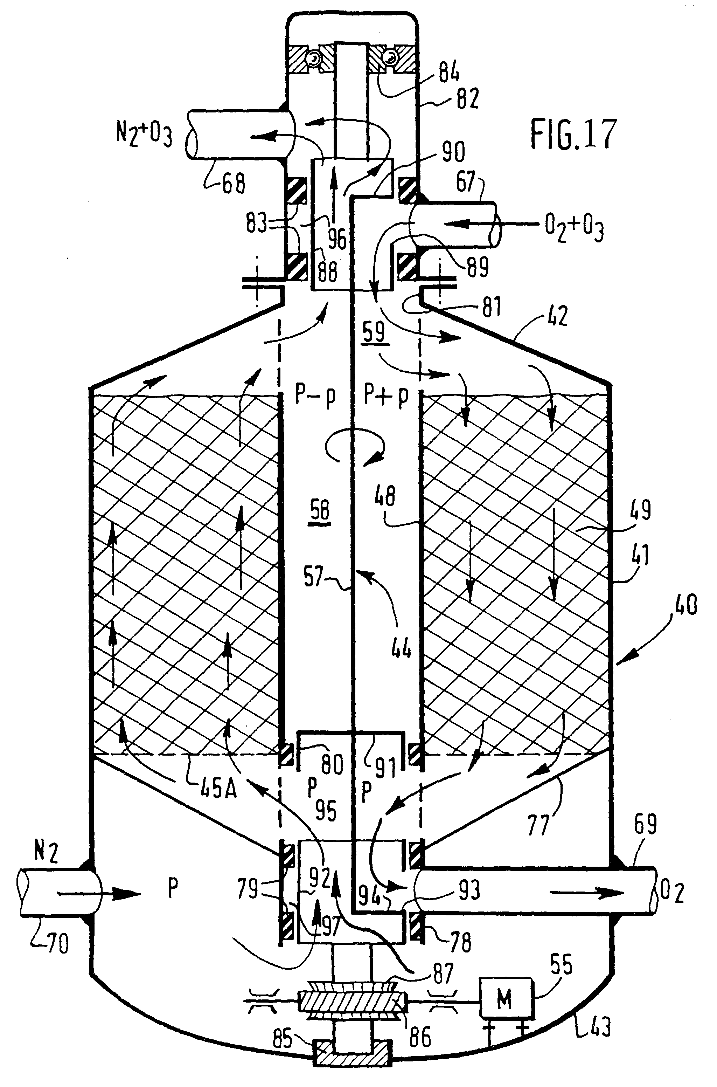

Comme on le voit aux figures 14 et 16, la plaquette 94 a une forme s'étendant un peu en deça d'une demi-lune et est limitée par deux rayons formant entre eux un angle aigu ; l'un de ses rayons se trouve dans le plan de la cloison 57, et l'autre est décalé d'un angle aigu dans le sens anti-horaire (en considérant les figures 13, 14, et 16) par rapport au rayon diamétralement Opposé, ce décalage correspondant à un petit nombre de secteurs $\underline{n}$, avec n = 2 dans l'exemple représenté. Une cloison 95, formant un dièdre de même angle, s'étend verticalement entre ces rayons et la face inférieure de l'obturateur 91. Entre le joint supérieur 79 et le joint 80, cette cloison 95 frotte par ses deux bords, munis de raclettes d'étanchéité, sur le prolongement inférieur de la grille 48.

Chaque boisseau 88, 92 délimite un espace annulaire, respectivement 96, 97, avec la paroi cylindrique 82,78 qui l'entoure.

En fonctionnement, les orifices 67 à 70 sont branchés comme aux figures 8 à 11, et le noyau 44 est entraîné en rotation dans le sens horaire des figures 13 et 14. Le mélange oxygène-ozone arrive par la tubulure 67 et pénètre dans l'espace 59 à travers la fente 89 et éventuellement l'espace 96. De là, ce mélange traverse N/2 secteurs $72_1$ (figure 13), et de l'oxygène sort dans les compartiments 98 correspondants situés à l'extérieur de la grille 47.

Une partie de l'oxygène retraverse en sens inverse, c'est-à-dire vers l'axe X-X,n secteurs $72_3$ et $72_4$ (figure 13), et l'essentiel de l'oxygène sort par la tubulure 69 via la fente 93, et éventuellement l'espace annulaire 97, du boisseau inférieur 92.

Simultanément, l'azote introduit par la tubulure 70 traverse le boisseau 92 de bas en haut, pénètre dans les (N/2) - n compartiments 98 restants et, de là, traverse les secteurs $72_2$ correspondants vers l'axe X-X, pour s'évacuer par la tubulure 68 sous forme de mélange azote-ozone (avec un peu d'oxygène), après avoir traversé de bas en haut le boisseau supérieur 88.

On comprend que comme dans le cas des figures 8, 9 et 10, chaque secteur 72 subit successivement une phase d'adsorption de l'ozone du mélange oxygène-ozone, une phase de désorption à contre-courant par l'azote et une hase de balayage à co-courant par de l'oxygène, cet oxygène participant ensuite à la désorption et se retrouvant dans le gaz de production constitué essentiellement d'azote et d'ozone.

la figure 17 illustre un appareil tout-à-fait similaire à celui des figures 12 à 16 mais qui n'en diffère que par le fait que le lit d'adsorbant 49 est du type "plat", c'est-à-dire à écoulement axial, au lieu d'être du type à écoulement radial. Pour cela, l'appareil est modifié de la manière suivante : la grille extérieure 47 est supprimée, et le support 45 est remplacé par une grille-support horizontale 45 A s'étendant de la grille 48, au niveau du joint 80, jusqu'à la virole 41. Le lit 49 s'étend à peu près jusqu'au sommet de cette dernière et, sur toute la hauteur de ce lit, la grille 48 est pleine. L'appareil fonctionne de la même manière que celui des figures 12 à 16, à ceci près que les gaz traversent verticalement le lit 49.

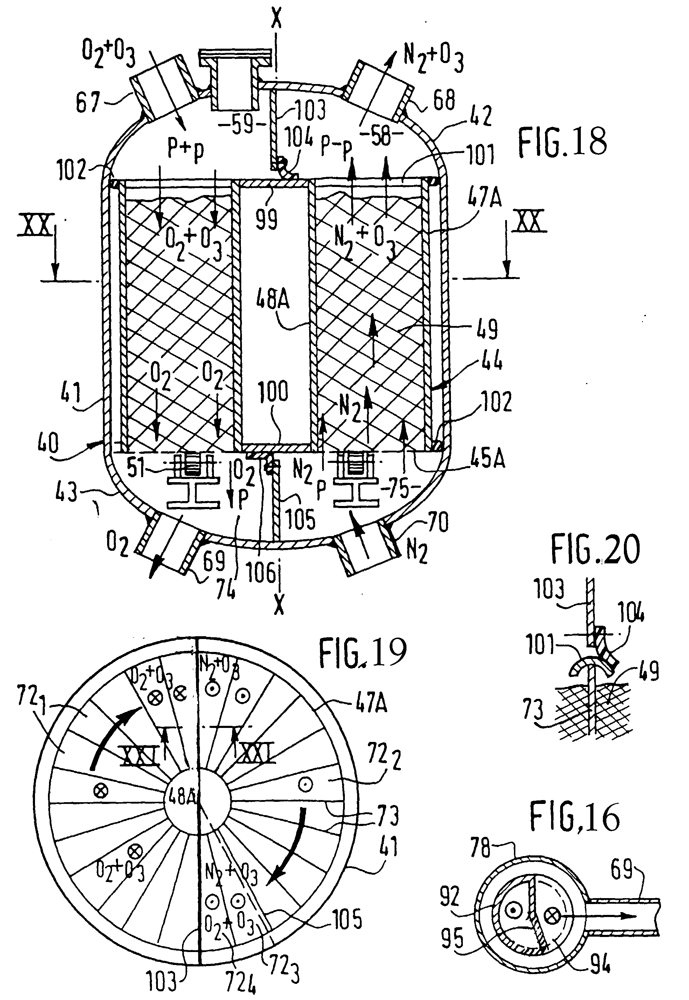

De même, le principe du lit rotatif illustré aux figures 8 à 10 peut s'appliquer au cas d'un lit d'adsorbant "plat", comme représenté aux figures 18 à 20.

Dans cette variante, l'équipage rotatif 44 comprend deux tôles cylindriques 47 A, 48 A, délimitant un espace annulaire dans lequel est disposé le lit d'adsorbant 49, qui l'emplit jusqu'à une faible distance de son sommet. Cet espace annulaire est fermé à sa base par une grille-support 45 A et est ouvert vers le haut. L'espace intérieur à la tôle intérieur 48 A est fermé à ses deux extrémités par des disques pleins supérieur 99 et inférieur 100.

Par ailleurs, l'espace annulaire contenant le lit 49 est comme précédemment divisé en N secteurs 72 par des plaques radiales 73 s'étendant sur toute sa hauteur et d'une tôle à l'autre. Sur le bord supérieur de chaque cloison 73 est fixé un arrondi 101 (figure 20) qui lui confère une section en T. L'équipage 44 repose sur un roulement circulaire 51, dont l'un au moins des galets est entraîné par un moteur non représenté.

Pour assurer la séparation des espaces contenant les différents gaz et distribuer les gaz entre les secteurs 72, il est prévu :

- deux joints d'étanchéité annulaires 102, fixés respectivement en haut et en bas de la virole 41 et frottant sur les parties supérieure et inférieure de la tôle extérieure 47 A ;
- une cloison diamétrale 103 partant du fond supérieur 42 et descendant jusqu'à proximité de l'équipage 44 ; cette cloison porte à son extrémité inférieure, sur toute sa longueur, une raclette d'étanchéité 104 qui coopère avec le disque 99 et le joint supérieur et, tour à tour, avec tous les arrondis 101 (figure 20) la rotation de l'équipage 44 ;
- une cloison inférieure 105 partant du fond inférieur 43 et montant jusqu'à proximité de l'équipage 44. Cette cloison se trouve sur la moitié de sa longueur dans le même plan que la cloison 103, et, sur l'autre moitié de sa longueur, dans un plan décalé par rapport à ce plan d'un angle aigu, correspondant à n secteurs $72_3$, $72_4$, dans le sens horaire de la figure 19. Dans l'exemple représenté, on a choisi n = 2. La cloison 105 porte sur toute sa longueur sur son bord supérieur une râclette d'étanchéité 106 qui frotte sur la grille 45 A, sur le disque inférieur 100 et sur le joint inférieur 102.

Les orifices 67 et 68 débouchent de part et d'autre de la cloison 103, tandis que les orifices 69 et 70 débouchent de part et d'autre de la cloison 105.

En fonctionnement, l'équipage 44 est entraîné en rotation dans le sens horaire. Comme précédemment, le mélange oxygène-ozone pénètre par l'orifice 67 dans l'appareil, traverse de haut en bas N/2 secteurs $72_1$ en phase d'adsorption et sort pour l'essentiel par l'orifice 69 sous forme d'oxygène pur. L'azote pénètre par l'orifice 70, traverse de bas en haut (N/2) - n secteurs $72_2$ en phase de désorption et sort par l'orifice 68 sous forme du mélange de production constitué essentiellement d'azote et d'ozone. Une partie de l'oxygène est renvoyé de bas en haut à travers les n secteurs restants $72_3$, $72_4$, pour compléter la désorption de ces secteurs et en effectuer le balayage.

On remarque que dans tous les modes de réalisation décrits ci-dessus, l'espace contenant de l'azote est adjacent à celui contenant de l'oxygène, ces deux espaces (par exemple les espaces 75 et 74 des figures 8 à 10) étant sensiblement à la même pression P. Ainsi, le risque de fuites d'azote dans l'oxygène de la boucle d'ozonisation est minimal. De même, les deux autres espaces, contenant respectivement le mélange oxygène-ozone et le mélange de production, sont adjacents l'un à l'autre, le premier (espace 59 des figures 8 à 10) étant à la pression maximale P + p et le second (espace 58 des figures 8 à 10) étant à la pression minimale P-p. Ainsi il peut se produire une perte d'oxygène de la boucle, mais, là encore, l'azote ne peut pas passer dans celle-ci.

**Revendications**

1. Procédé de production d'ozone, du type dans lequel de l'oxygène en circulation dans une boucle d'ozonisation (1) est partiellement ozonisé dans un ozoneur (3), puis l'ozone est piégé par adsorption et désorbé par un gaz de substitution, caractérisé en ce que : on envoie le mélange oxygène-ozone dans une première masse d'adsorbant $(4 ; 72_1)$, dans un sens dit co-courant, où l'ozone est adsorbé ; on envoie simultanément dans une seconde masse d'adsorbant $(6 ; 72_2)$, à contre courant, un flux de gaz de substitution servant à la désorption de cette seconde masse ; on effectue simultanément un balayage d'une troisième masse d'adsorbant $(5 ; 72_3, 72_4)$ en faisant traverser cette troisième masse d'adsorbant par un flux de gaz de balayage constitué d'une partie du mélange oxygène-ozone prélevé dans la boucle (1), ce gaz de balayage circulant à co-courant dans ladite troisième masse d'adsorbant $(5 ; 72_3 ; 72_4)$ et en ce qu'on adjoint le gaz de balayage ayant traversé la troisième masse d'adsorbant $(5 ; 72_3, 72_4)$ au gaz de substitution avant que ce dernier pénètre dans ladite seconde masse d'adsorbant $(6 ; 72_2)$, chaque masse d'adsorbant $(4 à 6 ; 72_1 à 72_4)$ étant successivement traversée par le mélange oxygène-ozone, le gaz de substitution et le gaz de balayage.

2. Procédé de production d'ozone suivant la revendication 1, du type dans lequel, dans au moins une boucle d'ozonisation (1 ; 1A ... 1D), de l'oxygène est partiellement ozonisé dans un ozoneur (3), puis l'ozone est piégé à froid par adsorption et désorbé par un gaz de substitution, caractérisé en ce qu'on produit par distillation d'air l'oxygène à ozoniser et un gaz résiduaire, et en ce qu'on utilise le gaz résiduaire comme gaz de substitution et l'un au moins de ces deux gaz pour fournir l'appoint de froid nécessaire pour amener le mélange oxygène-ozone à la température froide d'adsorption.

3. Procédé suivant la revendication 2 caractérisé en ce qu'on produit la totalité du froid nécessaire en détendant dans une turbine (22) une partie importante, notamment la moitié ou plus du débit d'air avant de la distiller, l'énergie mécanique ainsi produite étant utilisée pour compléter la compression de l'air.

4. Procédé suivant l'une quelconque des revendications 1 à 3, caractérisé en ce qu'on utilise un débit de gaz de substitution du même ordre que le débit de mélange oxygène-ozone.

5. Procédé suivant l'une quelconque des revendications 1 à 4 caractérisé en ce que le gaz de substitution est utilisé pour la désorption à une température légèrement supérieure à la température d'adsorption.

6. Procédé suivant l'une quelconque des revendications 1 à 5, caractérisé en ce que le gaz de substitution est utilisé pour la désorption à une pression inférieure à la pression d'adsorption.

7. Procédé suivant l'une quelconque des revendications 1 à 6, caractérisé en ce qu'on module au cours de la phase de désorption le débit de gaz de substitution de manière à maintenir sensiblement constante la quantité d'ozone délivrée à l'utilisateur.

8. Procédé suivant l'une quelconque des revendications 1 à 7, caractérisé en ce que, pour répondre instantanément à une variation de la demande d'ozone, on fait varier instantanément dans le même sens le débit de gaz de substitution.

9. Procédé de production d'ozone suivant l'une quelconque des revendications précédentes à n boucles d'ozonisation (1A...1D) du type dans lequel, dans chaque boucle, de l'oxygène est partiellement ozonisé dans un ozoneur (3), puis l'ozone est piégé par adsorption et désorbé par un gaz de substitution, caractérisé en ce que, dans chaque boucle, on utilise deux bouteilles d'adsorption (4A, 5A ...4D, 5D), de la manière suivante : le mélange oxygène-ozone est refroidi et envoyé dans une bouteille d'adsorption (4), dans un sens dit co-courant, où l'ozone est adsorbé, puis on envoie dans la même bouteille, à contre-courant, un flux de gaz de substitution, puis on effectue un balayage en faisant traverser la même bouteille par un flux de gaz de balayage constitué d'une partie du mélange oxygène-ozone prélevé dans la boucle, ce gaz de balayage circulant à co-courant et en ce que, dans une partie au moins de chaque $n^{ième}$ de cycle, on a simultanément une bouteille (4A 4D) de chaque boucle en phase d'adsorption à co-courant, une bouteille (5A, 5B, 5C) de (n-1) boucles (1A, 1B, 1C) en phase de désorption à contre-courant et la bouteille restante (5D) de la $N^{ième}$ boucle (1D) en phase de balayage par un flux de gaz de balayage prélevé dans cette $n^{ième}$ boucle et circulant à co-courant.

10. Procédé suivant la revendication 9, caractérisé en ce que les temps de désorption et de balayage de chaque bouteille (4A, 5A ... 4D, 5D) sont respectivement (n - 1)/n et 1/n et par rapport au temps d'adsorption pris comme unité.

11. Appareil pour la mise en oeuvre d'un procédé suivant l'une quelconque des revendications 1 à 8 caractérisé en ce qu'il comprend :

- une enveloppe (40) contenant un lit annulaire (49) de matière adsorbante divisé en un certain nombre de secteurs (72) ;

- des cloisons (53, 57, 63 à 66, 71 ; 57, 88, 91, 92; 95, 102, 103, 105) délimitant quatre espaces (59, 74, 75, 58) communiquant respectivement avec un premier orifice (67) d'entrée de mélange oxygène-ozone, un second orifice (69) de sortie d'oxygène, un troisième orifice (70) d'entrée de gaz de substitution et un quatrième orifice (68) de sortie de gaz de production constitué essentiellement du gaz de substitution et d'ozone, ces cloisons faisant communiquer ledit second orifice (69) avec le côté aval, vis-à-vis de l'adsorption, d'un premier ensemble de secteurs ($72_1$), ledit premier orifice (67) avec le côté amont, vis-à-vis de l'adsorption, d'un second ensemble de secteurs ($72_1$, $72_3$, $72_4$) constitué dudit premier ensemble ($72_1$) et d'un troisième ensemble de secteurs ($72_3$, $72_4$) adjacent à ce premier ensemble, ledit quatrième orifice (68) avec le côté aval, vis-à-vis de la désorption à contre-courant, d'un quatrième ensemble de secteurs ($72_2$) constitué des secteurs restants, et ledit troisième orifice (70) avec le côté amont vis-à-vis de la désorption, desdits troisième et quatrième ensembles de secteurs ($72_2$, $72_3$, $72_4$) ; et

des moyens (51, 55) pour effectuer une rotation relative entre le lit annulaire (49) et lesdites cloisons dans un sens tel que chaque secteur (72) fasse successivement et cycliquement partie desdits premier, quatrième et troisième ensembles.

12. Appareil suivant la revendication 11 caractérisé en ce que ledit lit d'adsorbant (49) est monté rotatif dans l'enveloppe (40) tandis que les cloisons sont fixes.

13. Appareil suivant la revendication 11 caractérisé en ce que ledit lit d'adsorbant (49) est fixe tandis que les cloisons sont montées rotatives dans l'enveloppe (40).

14. Appareil suivant la revendication 13 caractérisé en ce que les cloisons constituent un noyau tournant (44) disposé au centre du lit d'adsorbant (49), ce noyau comportant deux boisseaux (88, 92).

15. Appareil suivant l'une quelconque des revendications 11 à 14, caractérisé en ce que le lit d'adsorbant (49) est du type à écoulement radial.

16. Appareil suivant l'une quelconque des revendications 11 à 14 caractérisé en ce que le lit d'adsorbant (49) est du type à écoulement axial.

17. Appareil suivant l'une quelconque des revendications 11 à 16, caractérisé en ce que les moyens (51, 54 à 56) d'entraînement en rotation sont entièrement contenus dans un même espace (75) de l'enveloppe (40) contenant le gaz de substitution.

18. Appareil suivant l'une quelconque des revendications 11 à 17 caractérisé en ce que les espaces (58, 59) communiquant respectivement avec lesdits quatrième orifice (68) et premier orifice (67) sont adjacents l'un à l'autre, de même que les deux autres espaces (74, 75).

**Patentansprüche**

1. Verfahren zur Herstellung von Ozon des Typs, in welchem der in einem Ozonisierungskreislauf (1) zirkulierende Sauerstoff in einem Ozonisator (3) teilweise ozonisiert und das Ozon danach durch Adsorption aufgenommen und von einem Austauschgas desorbiert wird, **dadurch gekennzeichnet, daß** das Sauerstoff-Ozon-Gemisch im Gleichstrom durch eine erste Adsorbensmasse (4; $72_1$), worin das Ozon adsorbiert wird, und gleichzeitig durch eine zweite Adsorbensmasse (6; $72_2$) ein Strom eines Austauschgases, das zum Desorbieren der zweiten Masse dient, im Gegenstrom geführt und gleichzeitig eine dritte Adsorbensmasse (5; $72_3$, $72_4$) gespült wird, indem man diese dritte Adsorbensmasse von einem Spülgasstrom durchströmen läßt, der aus einem Teil des Sauerstoff-Ozon-Gemischs besteht, der dem Kreislauf (1) entnommen worden ist, wobei dieses Spülgas im Gleichstrom durch die dritte Adsorbensmasse (5; $72_3$, $72_4$) zirkuliert, **und daß** das Spülgas, das die dritte Adsorbensmasse (5; $72_3$, $72_4$) durchströmt hat, dem Austauschgas zugesetzt wird, bevor dieses in die zweite Adsorbensmasse (6; $72_2$) eintritt, wobei jede Adsorbensmasse (4 bis 6; $72_1$ bis $72_4$) nacheinander von dem Sauerstoff-Ozon-Gemisch, dem Austauschgas und dem Spülgas durchströmt wird.

2. Verfahren zur Herstellung von Ozon nach Anspruch 1 des Typs, worin in wenigstens einem Ozonisierungskreislauf (1; 1A ... 1D) der Sauerstoff in einem Ozonisator (3) teilweise ozonisiert und danach das Ozon in der Kälte durch Adsorption aufgenommen und von einem Austauschgas desorbiert wird, **dadurch gekennzeichnet, daß** der zu ozonisierende Sauerstoff und ein Restgas durch Luftdestillation erzeugt werden **und daß** das Restgas als Austauschgas und wenigstens eines der beiden Gase zur zusätzliches Bereitstellung der Kälte verwendet wird, die erforderlich ist, um das Sauerstoff-Ozon-Gemisch auf kalte Adsorptionstemperatur zu bringen.

3. Verfahren nach Anspruch 2, **dadurch gekennzeichnet, daß** man die gesamte erforderliche Kälte erzeugt, indem in einer Turbine (22) ein großer Teil, insbesondere wenigstens die Hälfte, des Durchsatzes der Luft vor deren Destillation entspannt und die so entstehende mechanische Energie zur Vervollständigung der Luftverdichtung genutzt wird.

4. Verfahren nach einem der Ansprüche 1 bis 3, **dadurch gekennzeichnet, daß** ein Durchsatz des Austauschgases eingesetzt wird, der dieselbe Größenordnung wie der des Sauerstoff-Ozon-Gemisches hat.

5. Verfahren nach einem der Ansprüche 1 bis 4, **dadurch gekennzeichnet, daß** das Austauschgas zur Desorption bei einer Temperatur eingesetzt wird, die etwas über der Adsorptionstemperatur liegt.

6. Verfahren nach einem der Ansprüche 1 bis 5, **dadurch gekennzeichnet, daß** das Austauschgas zur Desorption bei einem Druck eingesetzt wird, der unter dem Adsorptionsdruck liegt.

7. Verfahren nach einem der Ansprüche 1 bis 6, **dadurch gekennzeichnet, daß** man während der Desorptionsphase den Durchsatz des Austauschgases derart verändert, daß die an den Verbraucher gelieferte Ozonmenge im wesentlichen konstant bleibt.

8. Verfahren nach einem der Ansprüche 1 bis 7, **dadurch gekennzeichnet, daß** man, um unmittelbar auf einen veränderten Ozonbedarf zu reagieren, sofort im gleichen Sinn auf den Durchsatz des Austauschgases einwirkt.

9. Verfahren zur Herstellung von Ozon nach einem der vorhergehenden Ansprüche mit n Ozonisierungskreisläufen (1A ... 1D) des Typs, in welchem in jedem Kreislauf der Sauerstoff in einem Ozonisator (3) teilweise ozonisiert und das Ozon danach durch Adsorption aufgenommen und von einem Austauschgas desorbiert wird, **dadurch gekennzeichnet, daß** man in jedem Kreislauf zwei Adsorptionskolonnen (4A, 5A ... 4D, 5D) auf folgende Weise einsetzt: Das Sauerstoff-Ozon-Gemisch wird abgekühlt und im Gleichstrom durch eine Adsorptionskolonne (4) geleitet, worin das Ozon adsorbiert wird, danach wird durch dieselbe Kolonne im Gegenstrom ein Austauschgasstrom geleitet und anschließend gespült, indem man diese Kolonne von einem Spülgasstrom durchströmen läßt, der aus einem Teil des Sauerstoff-Ozon-Gemischs besteht, der dem Kreislauf entnommen worden ist, wobei dieses Spülgas im Gleichstrom zirkuliert, **und daß** sich in wenigstens einem Teil jedes n-ten Zyklus gleichzeitig eine Kolonne (4A, ... 4D) jedes Kreislaufs in einer Adsorptionsphase im Gleichstrom, eine Kolonne (5A, 5B, 5C) der (n-1)-ten Kreisläufe (1A, 1B, 1C) in der Desorptionsphase im Gegenstrom und die übrige Kolonne (5D) des N-ten Kreislaufs (1D) in der Spülphase mit einem Strom des Spülgases befindet, der dem n-ten Kreislauf entnommen ist und im Gleichstrom zirkuliert.

10. Verfahren nach Anspruch 9, **dadurch gekennzeichnet, daß** die Desorptions- und die Spülzeit jeder Kolonne (4A, 5A ... 4D, 5D) (n - 1)/n bzw. 1/n, bezogen auf die als Einheit genommene Adsorptionszeit, beträgt.

11. Vorrichtung zur Durchführung des Verfahrens nach einem der Ansprüche 1 bis 8, **dadurch gekennzeichnet, daß** sie

- einen Mantel (40), der ein ringförmiges Bett (49), das in eine bestimmte Anzahl Sektoren (72) eingeteilt ist, aus einem Adsorbens enthält,

- Zwischenwände (53, 57, 63 bis 66, 71; 57, 88, 91, 92; 95, 102, 103, 105), die vier Zwischenräume (59, 74, 75, 58) begrenzen, die jeweils mit einer ersten Öffnung (67) für den Eintritt des Sauerstoff-Ozon-Gemisches, einer zweiten Öffnung (69) für den Sauerstoffausgang, einer dritten Öffnung (70) für den Eintritt des Austauschgases und einer vierten Öffnung (68) für den Ausgang des Produktgases, das im wesentlichen aus Austauschgas und Ozon besteht, in Verbindung stehen, wobei diese Zwischenwände die zweite Öffnung (69) mit der gegenüber der Adsorption stromabwärtigen Seite einer ersten Gruppe $(72_1)$ von Sektoren, die erste Öffnung (67) mit der gegenüber der Adsorption stromaufwärtigen Seite einer zweiten Gruppe $(72_1, 72_3, 72_4)$ von Sektoren, die aus der ersten Gruppe $(72_1)$ und einer an diese erste Gruppe angrenzenden dritten Gruppe $(72_3, 72_4)$ von Sektoren besteht, die vierte Öffnung (68) mit der gegenüber der Desorption im Gegenstrom stromabwärtigen Seite einer vierten Gruppe $(72_2)$ von Sektoren, die aus den übrigen Sektoren besteht, und die dritte Öffnung (70) mit der gegenüber der Desorption stromaufwärtigen Seite der dritten und vierten Gruppe $(72_2, 72_3, 72_4)$ von Sektoren kommunizieren lassen, und

- Mittel (51, 55), um zwischen dem ringförmigen Bett (49) und den Zwischenwänden eine relative Drehung in einer solchen Richtung ausführen zu können, daß jeder Sektor (72) nacheinander und zyklisch Teil der ersten, vierten und dritten Gruppe wird,

umfaßt.

12. Vorrichtung nach Anspruch 11, **dadurch gekennzeichnet, daß** das Adsorbensbett (49) im Mantel (40) drehbar angebracht ist, während die Zwischenwände fest sind.

13. Vorrichtung nach Anspruch 11, **dadurch gekennzeichnet, daß** das Adsorbensbett (49) fest ist, während die Zwischenwände drehbar im Mantel (40) angebracht sind.

14. Vorrichtung nach Anspruch 13, **dadurch gekennzeichnet, daß** die Zwischenwände einen im Zentrum des Adsorbensbetts (49) angeordneten, sich drehenden Kern (44) bilden, der zwei abgestufte Rohre (88, 92) enthält.

15. Vorrichtung nach einem der Ansprüche 11 bis 14, **dadurch gekennzeichnet, daß** das Adsorbensbett (49) radial durchströmt wird.

16. Vorrichtung nach einem der Ansprüche 11 bis 14, **dadurch gekennzeichnet, daß** das Adsorbensbett (49) axial durchströmt wird.

17. Vorrichtung nach einem der Ansprüche 11 bis 16, **dadurch gekennzeichnet, daß** sich die Mittel (51, 54 bis 56) für den Drehantrieb vollständig in demselben Zwischenraum (75) des Mantels (40) befinden, der das Austauschgas enthält.

18. Vorrichtung nach einem der Ansprüche 11 bis 17, **dadurch gekennzeichnet, daß** die Zwischenräume (58, 59), die jeweils mit der vierten Öffnung (68) bzw. der ersten Öffnung (67) in Verbindung stehen, wie die beiden anderen Zwischenräume (74, 75) aneinander angrenzen.

## Claims

1. A process for producing ozone, of the type in which oxygen circulating in an ozonization loop (1) is partly ozonized in an ozonizer (3), then the ozone is trapped by adsorption and desorbed by a substitution gas, characterized in that it comprises sending the oxygen-ozone mixture into a first adsorbent mass $(4; 72_1)$ in cocurrent direction, where the ozone is adsorbed ; simultaneously sending into a second adsorbent mass $(6 ; 72_2)$, in a countercurrent manner, a flow of substitution gas for the desorption of this second mass ; simultaneously effecting a scavenging of a third adsorbant mass (5 ; $72_3$, $72_4$) by passing through said third adsorbent mass a flow of scavenging gas constituted by a part of the oxygen-ozone mixture taken from the loop (1), said scavenging gas circulating in a cocurrent manner in said third adsorbent mass (5 ; $72_3$, $72_4$) and the scavenging gas which has passed through the third adsorbent mass (5; $72_3$, $72_4$) is combined with the substitution gas before the latter enters said second adsorbant mass (6 ; $72_2$), each adsorbent mass (4 to 6; $72_1$, to $72_4$) being successively traversed by the oxygen-ozone mixture, the substitution gas and the scavenging gas.

2. A process for producing ozone, according to claim 1, of the type in which, in at least one ozonization loop (1; 1A..., 1D), oxygen is partly ozonized in an ozonizer (3), then the ozone is trapped at low temperature by adsorption and desorbed by a substitution gas characterised in that is comprises producing by distillation of air the oxygen to be ozonized and a residual gas, utilizing the residual gas as the substitution gas and at least one of these two gases for providing a supplement of cold required for bringing the oxygen-ozone mixture to the low adsorption temperature.

3. A process according to claim 2 characterised in that it comprises producing the whole of the required cold by expanding in a turbine (22) a large part, in particular at least one half, of the air flow before distilling it, the mechanical energy thus produced being used for completing the compression of the air.

4. A process according to any one of the claims 1 to 3, characterized in that it comprises using a flow of substitution gas on the same order as the flow of the oxygen-ozone mixture.

5. A process according to any one of the claims 1 to 4, characterised in that the substitution gas is used for the desorption at a temperature slighly higher than the adsorption temperature.

6. A process according to any one of the claims 1 to 5, characterised in that the substitution gas is used for desorption at a pressure lower than the adsorption pressure.

7. A process according to any one of the claims 1 to 6 characterised in that it comprises modulating in the course of the desorption stage the flow of substitution gas so as to maintain the quantity of oxygen delivered to the user substantially constant.

8. A process according to any one of the claims 1 to 7, characterised in that, for instantaneously responding to a variation in the demand for ozone, instantaneously varying in the same direction the substitution gas flow.

9. A process for producing ozone, in particular according to any one of the preceeding claims having n ozonisation loops (1A,... 1D), of the type in which, in each loop, oxygen is partly ozonized in an ozonizer (3), then the ozone is trapped by adsorption and desorbed by a substitution gas, characterised in that said process comprises employing in each loop two adsorption cylinders (4A, 5A, ..., 4D, 5D), in the following manner : cooling the oxygen-ozone mixture and sending it into an adsorption cylinder (4), in a cocurrent manner, where the ozone is adsorbed, then sending into the same cylinder, in a countercurrent manner, a substitution gas flow, then effecting a scavenging by passing through the same cylinder a scavenging gas constituted by a part of the oxygen-ozone mixture taken from the loop, said scavenging gas circulating in a cocurrent manner, and, in at least a part of each nth of a cycle, there is simultaneously a cylinder (4A,..., 4D) of each loop in a cocurrent adsorption stage, a cylinder (5A, 5B, 5C) of (n - 1) loops (1A, 1B, 1C) in a countercurrent desorption stage and the remaining cylinder (5D) of the nth loop (1D) in the stage for scavenging by a scavenging gas flow taken from this nth loop and circulating in a cocurrent manner.

10. A process according to claim 9, characterised in that the desorption and scavenging times of each cylinder (4A, 5A,... 4D,5D) are respectively (n - 1)/n and 1/n relative to the adsorption time taken as one.

11. An apparatus for carrying out a process according to any one of the claims 1 to 8, characterised in that it comprises :

a case (40) containing an annular bed (49) of adsorbent material divided into a certain number of sectors (72) ; partition walls (53, 57, 63 to 66, 71 ; 57, 88, 91, 92, 95, 102, 103, 105) defining four spaces (59, 74, 75, 58) respectively communicating with a first oxygen-ozone mixture inlet orifice (67), a second oxygen outlet orifice (69), a third substitution gas orifice (70) and a fourth orifice (68) for the outlet of production gas essentially constituted by the substitution gas and ozone, these partition walls putting said second orifice (69) in communication with the downstream side, with respect to the adsorption, of a first group of sectors ($72_1$), said first

orifice (61) with the upstream side, with respect to the adsorption of a second group of sectors ($72_1$, $72_3$, $72_4$), constituting by said first group ($72_1$) and a third group sectors ($72_3$, $72_4$) adjacent to this first group, said fourth orifice (68) with the downstream side, with respect to the countercurrent desorption, of a fourth group of sectors ($72_2$) constituted by the remaining sectors, and said third orifice (70) with the upstream side, with respect to the desorption, of said third and fourth groups of sectors ($72_2$, $72_3$, $72_4$) and

means (51 ; 55) for effecting a relative rotation between the annular bed (49) and said partition walls in such direction that each sector (72) is in succession and cyclically part of said first, fourth and third groups.

12. An apparatus according to claim 11, characterised in that the adsorbent bed (49) is rotatively mounted in the case (40) and the partition walls are fixed.

13. An apparatus according to claim 11, characterised in that the adsorbent bed (49) is fixed and the partition walls are rotatively mounted in the case (40).

14. An apparatus according to claim 13 characterised in that the partition walls constitute a rotating core (44) disposed at the centre of the adsorbent bed (49), this core including two plug valves (88, 92).

15. An apparatus according to any one of the claims 11 to 14 characterised in that the adsorbent bed (49) is of the radial flow type.

16. An apparatus according to any one of the claims 11 to 14, characterised in that the adsorbent bed (49) is of the axial flow type.

17. An apparatus according to any one of the claims 11 to 16, characterised in that the means (51, 54 to 56) for driving in rotation are completely contained in the same space (75) of the case (40) containing the substitution gas.

18. An apparatus according to any one of the claims 11 to 17, characterised in that the spaces (58, 59) respectively communicating with said fourth orifice (68) and first orifice (7) are adjacent to each other, as are the other two spaces (74, 75).

FIG.1

| | BOUTEILLE 4 | BOUTEILLE 5 | BOUTEILLE 6 |
|---|---|---|---|
| 0 | ADSORPTION | BALAYAGE | DESORPTION |
| 4 mn | DESORPTION | ADSORPTION | BALAYAGE |
| 8 mn | BALAYAGE | DESORPTION | ADSORPTION |
| 12 mn | | | |

FIG.2

FIG.3

| ADSORPTION | DESORPTION | BALAYAGE |

FIG.4

FIG.5A

FIG.5B

FIG.6

FIG.7

FIG.8

O₂+O₃  X  N₂+O₃

67 · 68 · 50 · FIG.9 · 42 · 75 · 65 · N₂ · N₂ · 44 · 46 · 49 · P+p · P-p · VIII · 58 · VIII · 59 · P · O₂ · 57 · N₂ · 41 · 47 · 48 · 40 · 74 · 45 · 60 · 66 · 51 · 56 · 54 · 53 · P · 52 · 55 · M · P · 71 · 43 · 69 · 70 · O₂ · X · N₂

FIG.10

FIG. 11

FIG.12

FIG.13

FIG.15

FIG.14

FIG.17

FIG.18

$O_2+O_3$

67

$P+p$

102

$-59-$

103

104 $P-p$

$N_2+O_3$

68

42

101

FIG.20

103

104

101

49

73

$O_2+O_3$

99

$N_2+O_3$

47A

48A

49

44

41

$O_2$ $O_2$

100

$N_2$

102

40

51

$N_2$

45A

43

$O_2$ $P$

$P$

$-75-$

105

$O_2$

69

74

106

$N_2$

70

X

FIG.19

$72_1$

$O_2+O_3$

$N_2+O_3$

47A

$72_2$

48A

73

41

$O_2+O_3$

$N_2+O_3$

105

$O_2+O_3$

103

$72_4$

$72_3$

FIG.16

78

69

92

95

94